(19) Europäisches Patentamt
European Patent Office
Office européen des brevets

(11) **EP 4 629 666 A1**

(12) **EUROPEAN PATENT APPLICATION**
published in accordance with Art. 153(4) EPC

(43) Date of publication:
**08.10.2025 Bulletin 2025/41**

(21) Application number: **22966771.2**

(22) Date of filing: **29.11.2022**

(51) International Patent Classification (IPC):
**H04W 4/02** $^{(2018.01)}$

(52) Cooperative Patent Classification (CPC):
**H04W 4/02**

(86) International application number:
**PCT/CN2022/135097**

(87) International publication number:
**WO 2024/113173 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **ZHANG, Jinyu
Dongguan, Guangdong 523860 (CN)**
• **CUI, Shengjiang
Dongguan, Guangdong 523860 (CN)**
• **XU, Weijie
Dongguan, Guangdong 523860 (CN)**

(74) Representative: **RGTH
Patentanwälte PartGmbB
Neuer Wall 10
20354 Hamburg (DE)**

(54) **POSITIONING METHODS AND DEVICES**

(57) Provided in the embodiments of the present application are positioning methods and devices. **In** a positioning scenario in which zero-power-consumption devices participate, each zero-power-consumption device can determine time domain/frequency domain/space domain/code domain resources for backscatter thereof, thereby effectively avoiding interferences caused by a plurality of zero-power-consumption devices performing backscatter on same resources, which can improve the reception and measurement effects of backscatter signal receiving ends and improve the positioning precision. A positioning method comprises: a zero-power-consumption device receiving a carrier signal, the carrier signal being used for modulating and generating a backscatter signal used for positioning; and the zero-power-consumption device transmitting the backscatter signal on at least one resource, the at least one resource being determined on the basis of at least one of the following: a target resource pool, identification information of the zero-power-consumption device, identification information of a group to which the zero-power-consumption device belongs, and a first signaling received by the zero-power-consumption device.

_200_

```
A zero-power device receives a carrier signal, where the
carrier signal is used to be modulated to generate a        S210
backscatter signal for positioning
```

```
The zero-power device transmits the backscatter signal on at
least one resource, where the at least one resource is         S220
determined based on at least one of the following: a target
resource pool, identity information of the zero-power
device, group identity information of the zero-power device,
or first signalling received by the zero-power device
```

FIG. 7

**Description**

**TECHNICAL FIELD**

Embodiments of this application relate to the field of communications, and more specifically, to a positioning method and device.

**BACKGROUND**

Zero-power devices have low complexity and costs, can be maintenance-free and battery-free, can support energy harvesting and/or backscatter communication, and can be deployed at a high density and large scale at relatively low costs. During deployment, a zero-power device may be used as a positioning anchor to assist in positioning, thereby improving positioning accuracy. However, during a positioning process, backscatter signals transmitted by different zero-power devices may interfere with each other, which may affect measurement and positioning accuracy.

**SUMMARY**

Embodiments of this application provide a positioning method and device. In a positioning scenario involving a zero-power device, each zero-power device may determine a time domain resource, a frequency domain resource, a spatial domain resource, or a code domain resource for backscattering to be performed by the zero-power device, which effectively avoids interference caused by a plurality of zero-power devices performing backscattering on a same resource, and thus may improve reception and measurement performance at a receiving end of a backscatter signal and improve positioning accuracy.

According to a first aspect, there is provided a positioning method. The positioning method includes:

receiving, by a zero-power device, a carrier signal, where the carrier signal is used to be modulated to generate a backscatter signal for positioning; and

transmitting, by the zero-power device, the backscatter signal on at least one resource,

where the at least one resource is determined based on at least one of the following: a target resource pool, identity information of the zero-power device, group identity information of the zero-power device, or first signalling received by the zero-power device.

According to a second aspect, there is provided a positioning method. The positioning method includes:

transmitting, by a first device, first information,

where the first information is used to configure or indicate a target resource pool, and/or the first information is first signalling; and

at least one of the target resource pool or the first signalling is used by a zero-power device to determine a resource used for transmitting a backscatter signal, and the backscatter signal is used for positioning.

According to a third aspect, there is provided a zero-power device, configured to execute the method in the first aspect.

Specifically, the zero-power device includes a functional module configured to execute the method according to the first aspect.

According to a fourth aspect, there is provided a first device, configured to execute the method according to the second aspect.

Specifically, the first device includes a functional module configured to execute the method in the second aspect.

According to a fifth aspect, there is provided a zero-power device. The zero-power device includes a processor and a memory. The memory is configured to store a computer program, and the processor is configured to invoke and run the computer program stored in the memory to cause the zero-power device to execute the method in the first aspect.

According to a sixth aspect, there is provided a first device. The first device includes a processor and a memory. The memory is configured to store a computer program, and the processor is configured to invoke and run the computer program stored in the memory to cause the first device to execute the method according to the second aspect.

According to a seventh aspect, an apparatus is provided and is configured to implement the method according to any one of the first aspect and the second aspect.

Specifically, the apparatus includes a processor, configured to invoke a computer program from a memory and run the computer program, to cause a device on which the apparatus is installed to execute the method according to any one of the first aspect and the second aspect.

According to an eighth aspect, a computer-readable storage medium is provided and configured to store a computer program. The computer program causes a computer to execute the method according to any one of the first aspect and the second aspect.

According to a ninth aspect, a computer program product is provided. The computer program product includes computer program instructions. The computer program instructions cause a computer to execute the method according to any one of the first aspect and the second aspect.

According to a tenth aspect, a computer program is provided. The computer program, when runs on a computer, causes the computer to execute the method according to any one of the first aspect and the second aspect.

According to the foregoing technical solutions, in a positioning scenario involving a zero-power device, the zero-power device may determine a resource for transmitting a backscatter signal, based on at least one of the following: a target resource pool, identity information of the zero-power device, group identity information of the zero-power device, or first signalling received by the zero-power device. In other words, each zero-power device may determine a time domain resource, a frequency domain resource, a spatial domain resource, or a code domain resource for backscattering to be performed by the zero-power device, which effectively avoids interference caused by a plurality of zero-power devices performing backscattering on a same resource, and thus may improve reception and measurement performance at a receiving end of a backscatter signal and improve positioning accuracy.

## BRIEF DESCRIPTION OF DRAWINGS

FIG. 1 is a schematic diagram of a communications system architecture to which embodiments of this application are applied.

FIG. 2 is a diagram of a zero-power communication principle according to this application.

FIG. 3 is a diagram of a backscatter communication principle according to this application.

FIG. 4 is a diagram of an energy harvesting principle according to this application.

FIG. 5 is a diagram of a circuit principle of resistive load modulation according to this application.

FIG. 6 is a schematic diagram of positioning according to this application.

FIG. 7 is a schematic flowchart of a positioning method according to an embodiment of this application.

FIG. 8 is a schematic diagram of positioning according to an embodiment of this application.

FIG. 9 is a schematic diagram of a time-frequency resource in a target resource pool according to an embodiment of this application.

FIG. 10 is a schematic diagram of a spatial domain resource in a target resource pool according to an embodiment of this application.

FIG. 11 is a schematic flowchart of another positioning method according to an embodiment of this application.

FIG. 12 is a schematic block diagram of a zero-power device according to an embodiment of this application.

FIG. 13 is a schematic block diagram of a first device according to an embodiment of this application.

FIG. 14 is a schematic block diagram of a communications device according to an embodiment of this application.

FIG. 15 is a schematic block diagram of an apparatus according to an embodiment of this application.

FIG. 16 is a schematic block diagram of a communications system according to an embodiment of this application.

## DESCRIPTION OF EMBODIMENTS

The following describes the technical solutions in embodiments of this application with reference to the accompanying drawings in embodiments of this application. Apparently, the described embodiments are some rather than all of embodiments of this application. All other embodiments obtained by a person of ordinary skill in the art based on embodiments of this application without creative efforts shall fall within the protection scope of this application.

The technical solutions in embodiments of this application may be applied to various communications systems, for example, a global system for mobile communications (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an advanced long term evolution (Advanced long term evolution, LTE-A) system, a new radio (New Radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (Non-Terrestrial Networks, NTN) system, a universal mobile telecommunications system (Universal Mobile Telecommunication system, UMTS), a wireless local area network (Wireless Local Area Networks, WLAN), internet of things (internet of things, IoT), wireless fidelity (Wireless Fidelity, WiFi), a fifth-generation (5th-Generation, 5G) system, a sixth-generation (6th-Generation, 6G) system, or another communications system.

Generally, a conventional communications system supports a limited quantity of connections and is also easy to implement. However, with development of communication technologies, a mobile communications system not only supports conventional communication, but also supports, for example, device-to-device (Device to Device, D2D) communication, machine-to-machine (Machine to Machine, M2M) communication, machine type communication (Machine Type Communication, MTC), vehicle-to-vehicle (Vehicle to Vehicle, V2V) communication, sidelink (sidelink, SL) communication, or vehicle-to-everything (Vehicle to everything, V2X) communication. Embodiments of this application may also be applied to these communications systems.

In some embodiments, a communications system in embodiments of this application may be applied to a carrier aggregation (Carrier Aggregation, CA) scenario, a dual connectivity (Dual Connectivity, DC) scenario, a standalone (Standalone, SA) networking scenario, or a non-standalone (Non-Standalone, NSA) networking scenario.

In some embodiments, a communications system in embodiments of this application may be applied to an unlicensed spectrum, and the unlicensed spectrum may also be considered as a shared spectrum. Alternatively, a communications system in embodiments of this application may be applied to a licensed spectrum, and the licensed spectrum may also be considered as a nonshared spectrum.

In some embodiments, a communications system in embodiments of this application may be applied to an FR1 frequency band (corresponding to a frequency band range 410 MHz to 7.125 GHz), or may be applied to an FR2 frequency band (corresponding to a frequency band range 24.25 GHz to 52.6 GHz), or may be applied to a new frequency band, for example, corresponding to a frequency band range 52.6 GHz to 71 GHz, or a high frequency band corresponding to a frequency band range 71 GHz to 114.25 GHz.

Embodiments of this application are described with reference to a network device and a terminal device. The terminal device may also be referred to as a user equipment (User Equipment, UE), an access terminal, a subscriber unit, a subscriber station, a mobile site, a mobile station, a remote station, a remote terminal, a mobile device, a user terminal, a terminal, a wireless communications device, a user agent, a user apparatus, or the like.

The terminal device may be a station (STATION, ST) in a WLAN, may be a cellular phone, a cordless phone, a session initiation system (Session Initiation Protocol, SIP) phone, a wireless local loop (Wireless Local Loop, WLL) station, a personal digital assistant (Personal Digital Assistant, PDA) device, a handheld device with a wireless communication function, a computing device or another processing device connected to a wireless modem, a vehicle-mounted device, a wearable device, a terminal device in a next-generation communications system such as an NR network, or a terminal device in a future evolved public land mobile network (Public Land Mobile Network, PLMN), or the like.

In embodiments of this application, the terminal device may be deployed on land, including being indoors or outdoors, handheld, wearable, or vehicle-mounted. The terminal device may also be deployed on water (for example, on a ship), or may be deployed in the air (for example, on an airplane, an air balloon, or a satellite).

In embodiments of this application, the terminal device may be a mobile phone (Mobile Phone), a tablet computer (Pad), a computer with a wireless transceiver function, a virtual reality (Virtual Reality, VR) terminal device, an augmented reality (Augmented Reality, AR) terminal device, a wireless terminal device in industrial control (industrial control), a wireless terminal device in self-driving (self-driving), a wireless terminal device in remote medical (remote medical), a wireless terminal device in smart grid (smart grid), a wireless terminal device in transportation safety (transportation safety), a wireless terminal device in smart city (smart city), or a wireless terminal device in smart home (smart home), a vehicle-mounted communications device, a wireless communications chip/application specific integrated circuit (application specific integrated circuit, ASIC)/system on chip (System on Chip, SoC), or the like.

By way of example rather than limitation, in embodiments of this application, the terminal device may alternatively be a wearable device. The wearable device may also be referred to as an intelligent wearable device, and is a general term for wearable devices such as glasses, gloves, watches, clothes, and shoes that are intelligently designed and developed based on daily wearing by using a wearable technology. The wearable device is a portable device that can be directly worn or integrated into clothes or accessories of a user. In addition to being a hardware device, the wearable device can also realize various functions through software support, data interaction, and cloud interaction. In a broad sense, wearable smart devices may include a fullfeatured and large-sized device that can provide full or partial functions without relying on a smart phone, for example, a smart watch or smart glasses, and devices that focus on only a specific type of application function and need to cooperate with another device such as a smart phone for use, for example, various smart bracelets and smart jewelries for physical sign monitoring. Optionally, the terminal device may alternatively be a zero-power electronic tag. For example, the terminal device may alternatively be a small zero-power IoT device, such as an electronic tag used for object tracking and anti-loss, or a detection tag used for tracking and recording a status of an animal.

In embodiments of this application, the network device may be a device configured to communicate with a mobile device. The network device may be an access point (Access Point, AP) in a WLAN, may be a base transceiver station (Base Transceiver Station, BTS) in GSM or CDMA, may be a NodeB (NodeB, NB) in WCDMA, or may be an evolutional Node B (Evolutional Node B, eNB or eNodeB) in LTE, or a relay station or an access point, or a vehicle-mounted device, a wearable device, a network device or a gNB (gNB) or a transmission reception point (Transmission Reception Point, TRP) in an NR network, or a network device in a future evolved PLMN, or a network device in an NTN, or the like.

By way of example rather than limitation, in embodiments of this application, the network device may have a mobility characteristic. For example, the network device may be a mobile device. In some embodiments, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. In some embodiments, the network device may alternatively be a base station disposed in a location such as land or water.

In embodiments of this application, the network device may provide a service for a cell. The terminal device communicates with the network device by using a transmission resource (for example, a frequency domain resource or a spectrum resource) used by the cell. The cell may be a cell corresponding to the network device (for example, a base station). The cell may belong to a macro station or may belong to a base station corresponding to a small cell (Small cell). The small cell herein may include a metro cell (Metro cell), a micro cell (Micro cell), a pico cell (Pico cell), a femto cell (Femto cell), or the like. These small cells have a characteristic of a small coverage range and low transmit power, and are applicable to providing a high-rate data transmission service.

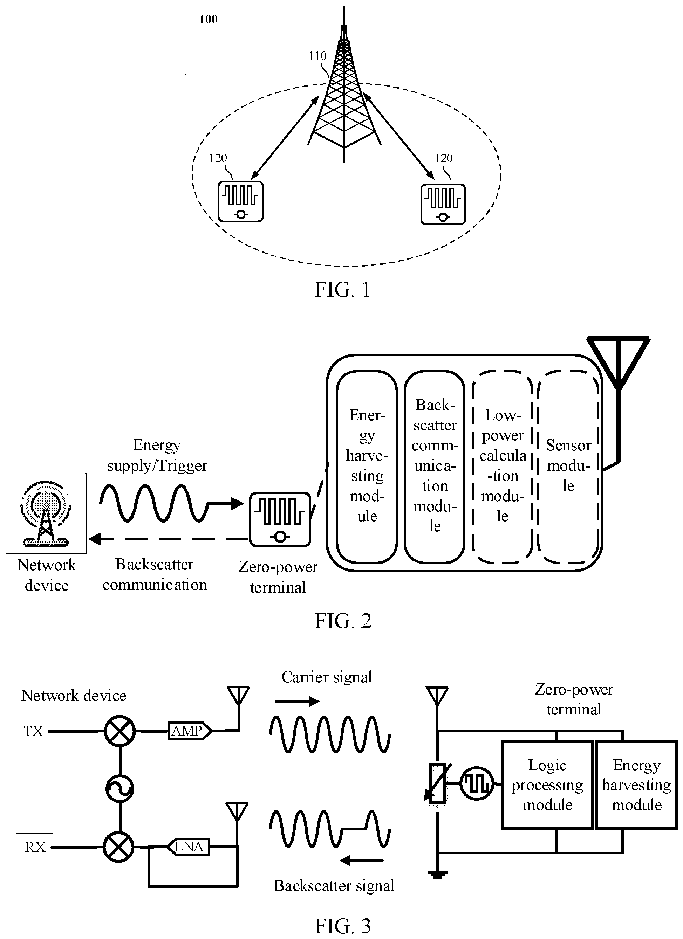

For example, a communications system 100 to which an embodiment of this application is applied is shown in FIG. 1. The communications system 100 may include a network device 110, and the network device 110 may be a device that communicates with a terminal device 120 (or referred to as a communications terminal or a terminal). The network device 110 may provide communication coverage for a specific geographical region, and may communicate with a terminal device within the coverage region.

FIG. 1 exemplarily shows one network device and two terminal devices. In some embodiments, the communications system 100 may include a plurality of network devices, and another quantity of terminal devices may be included in a coverage range of each network device, which is not limited in embodiments of this application.

In some embodiments, the communications system 100 may further include another network entity such as a network controller or a mobility management entity, which is not limited in embodiments of this application.

It should be understood that in embodiments of this application, a device having a communication function in a network or a system may be referred to as a communications device. The communications system 100 shown in FIG. 1 is used as an example. A communications device may include a network device 110 and a terminal device 120 having a communication function, and the network device 110 and the terminal device 120 may be specific devices described above. Details are not described herein again. The communications device may further include other devices in the communications system 100, such as a network controller, a mobility management entity, and other network entities. This is not limited in embodiments of this application.

It should be understood that the terms "system" and "network" may often be used interchangeably in this specification. In this specification, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

The terms used in implementations of this application are only used to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

It should be understood that, in embodiments of this application, "indication" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In descriptions of embodiments of this application, the term "corresponding" may mean that there is a direct or indirect correspondence between two elements, or that there is an association relationship between two elements, or that there is a relationship of "indicating" and "being indicated", "configuring" and "being configured", or the like.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may refer to a standard protocol in the communications field, and may be, for example, evolution of an existing LTE protocol, an NR protocol, a Wi-Fi protocol, or a protocol related to another related communications system. A type of the protocol is not limited in this application.

To facilitate better understanding of embodiments of this application, a zero-power device related to this application is described.

In recent years, zero-power devices have been increasingly widely applied. A typical zero-power device is a radio frequency identification (Radio Frequency Identification, RFID) tag, which implements a technology of contactless automatic transmission and identification of tag information through spatial coupling of radio frequency signals. The RFID tag is also referred to as a "radio frequency tag" or an "electronic tag". Electronic tags may be classified into the following types depending on different power supply manners: an active electronic tag, a passive electronic tag, and a semi-passive electronic tag. The active electronic tag, also referred to as a proactive electronic tag, refers to an electronic tag whose energy for operation is provided by a battery. The battery, a memory, and an antenna together form the active electronic tag, which continuously transmits information in a predefined frequency band until the battery is replaced. This is different from a passive radio frequency activation manner. The passive electronic tag is also referred to as a battery-free electronic tag, which does not support a built-in battery. When the passive electronic tag is close to a reader/writer, the tag is located in a near field range formed through antenna radiation of the reader/writer, an antenna of the electronic tag generates an induced current through electromagnetic induction, and the induced current drives a chip circuit of the electronic tag. The chip circuit transmits identity information stored in the tag to the reader/writer by using the antenna of the electronic tag. A semi-active electronic tag inherits advantages such as a small size, a light weight, a low price, and a long service life of the passive electronic tag. When the tag is not accessed by a reader/writer, a built-in battery supplies power to only a few circuits in a chip. The built-in battery supplies power to an RFID chip only when the tag is accessed by a reader/writer, to increase a read/write distance of the tag, thereby improving communication reliability.

RFID is a wireless communication technology. A most basic RFID system includes two parts: an electronic tag (TAG) and a reader/writer (Reader/Writer). The electronic tag includes a coupling component and a chip. Each electronic tag has a unique electronic code, which is placed on a to-be-detected target to mark a target object. The reader/writer can not only read information on the electronic tag, but also write information to the electronic tag, and provide the electronic tag with energy required for communication. As shown in FIG. 2, after entering an electromagnetic field, an electronic tag receives a radio frequency signal transmitted by a reader/writer. A passive electronic tag or a battery-free electronic tag transmits information stored in the electronic tag by using energy obtained from an electromagnetic field generated in space, and the reader/writer reads and decodes the information to identify the electronic tag.

Key technologies for zero-power communication include energy harvesting, backscatter communication, and low-power computing. As shown in FIG. 2, a typical zero-power communication system includes a reader/writer and a zero-power terminal. The reader/writer emits a radio wave, which is used to provide energy for the zero-power terminal. An energy harvesting module installed in the zero-power terminal may harvest energy carried by the radio wave in space (as shown in FIG. 2, the radio wave emitted by the reader/writer), which is used to drive a low-power calculation module of the zero-power terminal and implement backscatter communication. After obtaining the energy, the zero-power terminal may receive a control command from the reader/writer and transmit data to the reader/writer based on control signalling in a backscatter manner. The transmitted data may be from data stored in the zero-power terminal (for example, an identifier or pre-written information, such as a production date, a brand, or a manufacturer of a commodity). The zero-power terminal may also be provided with various sensors, to report, based on a zero-power mechanism, data collected by the various sensors.

To facilitate better understanding of embodiments of this application, backscatter communication (Back Scattering) related to this application is described.

As shown in FIG. 3, a zero-power device (a backscatter tag in FIG. 3) receives a carrier signal transmitted by a backscatter reader/writer, and harvests energy by using a radio frequency (radio frequency, RF) energy harvesting module. Further, the zero-power device provides energy for a low-power processing module (a logic processing module in FIG. 3), modulates an incident wave signal, and performs backscatter.

Main features of backscatter communication are as follows:

(1) The terminal does not actively transmit a signal, but implements backscatter communication by modulating an incident wave signal.
(2) The terminal does not rely on a conventional active power amplification transmitter, but uses a low-power calculation unit, which greatly reduces hardware complexity.
(3) Battery-free communication can be implemented by energy harvesting.

To facilitate better understanding of embodiments of this application, RF energy harvesting (Power Harvesting) related to this application is described.

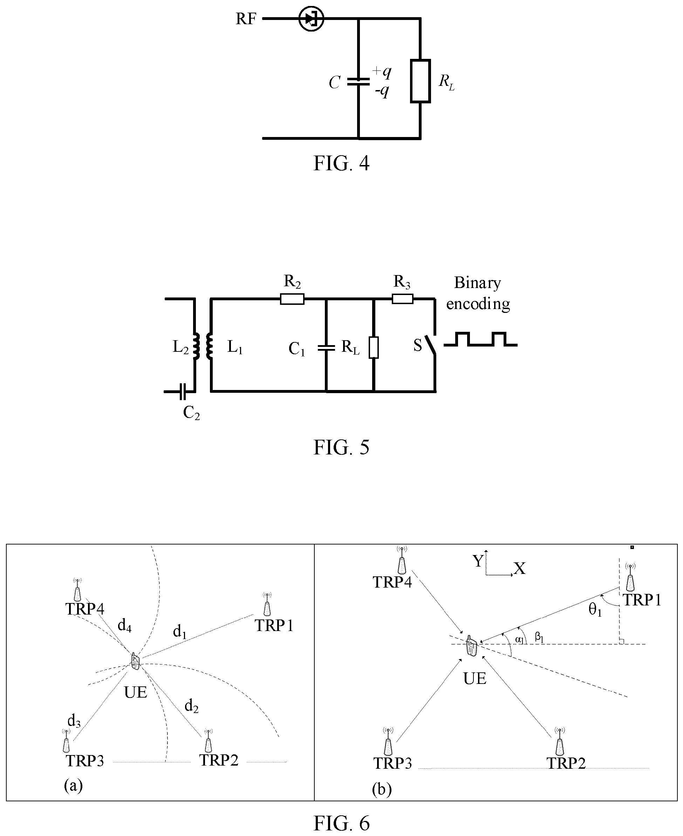

As shown in FIG. 4, the RF module harvests power of spatial electromagnetic waves through electromagnetic induction, so as to drive a load circuit (including a low-power operator, a sensor, and the like), thereby implementing battery-free operation.

To facilitate better understanding of embodiments of this application, load modulation related to this application is described.

Load modulation is a method generally used by an electronic tag to transmit data to a reader/writer. In load modulation, an electrical parameter of an oscillation circuit of an electronic tag is regulated according to a beat of a data stream, so that an amplitude and a phase of impedance of the electronic tag change accordingly, thereby completing a modulation process. Load modulation technologies mainly include resistive load modulation and capacitive load modulation. In resistive load modulation, a load is connected in parallel to a resistor, which is referred to as a load modulation resistor. The resistor is connected or disconnected according to a clock of a data stream, and on/off of a switch S is controlled by binary data encoding. FIG. 5 is a diagram of a circuit principle of resistive load modulation.

In capacitive load modulation, a load is connected in parallel to a capacitor, instead of the load modulation resistor controlled by binary data encoding in FIG. 5.

To facilitate better understanding of embodiments of this application, an encoding technology related to this application is described.

In data transmitted by an electronic tag, binary digits "1" and "0" may be represented by different forms of code. A radio frequency identification system usually uses one of the following encoding methods: non-return-to-zero (NRZ) inverted encoding, Manchester (Manchester) encoding, unipolar return-to-zero (Unipolar RZ) encoding, differential binary phase (DBP) encoding, Miller (Miller) encoding, or differential encoding. Generally, 0 and 1 are represented by using different pulse signals.

To facilitate better understanding of embodiments of this application, an energy supply signal in a zero-power communication system related to this application is described.

A carrier of the energy supply signal may be a base station, a smartphone, a smart gateway, a charging station, a micro base station, or the like.

In terms of a frequency band, a radio wave used for energy supply may be low-frequency, intermediate-frequency, high-frequency, or the like.

In terms of a waveform, the radio wave used for energy supply may be a sine wave, a square wave, a triangular wave, a pulse, a rectangular wave, or the like. In addition, the radio wave used for energy supply may be a continuous wave, or a discontinuous wave (that is, an interruption of specific time is allowed).

The energy supply signal may be a signal specified in a 3rd generation partnership project (The 3rd Generation Partnership Project, 3GPP) standard, such as a sounding reference signal (Sounding Reference Signal, SRS), a physical uplink shared channel (Physical Uplink Shared Channel, PUSCH), a physical random access channel (Physical Random Access Channel, PRACH), a physical uplink control channel (Physical Uplink Control Channel, PUCCH), a physical downlink control channel (Physical Downlink Control Channel, PDCCH), a physical downlink shared channel (Physical Downlink Shared Channel, PDSCH), or a physical broadcast channel (Physical Broadcast Channel, PBCH).

To facilitate better understanding of embodiments of this application, a trigger signal in a zero-power communication system related to this application is described.

In terms of a carrier, a carrier of the trigger signal may be a base station, a smartphone, a smart gateway, or the like.

In terms of a frequency band, a radio wave used for triggering may be low-frequency, intermediate-frequency, high-frequency, or the like.

In terms of a waveform, the radio wave used for triggering may be a sine wave, a square wave, a triangular wave, a pulse, a rectangular wave, or the like. In addition, the radio wave used for triggering may be a continuous wave, or a discontinuous wave (that is, an interruption of specific time is allowed).

The trigger signal may be a signal specified in a 3GPP standard, for example, an SRS, a PUSCH, a PRACH, a PUCCH, a PDCCH, a PDSCH, or a PBCH; or may be a new signal.

To facilitate better understanding of embodiments of this application, a cellular passive internet of things related to this application is described.

As 5G industry applications increase, there is an increasing variety of connected objects and application scenarios, and a higher requirement is also imposed on a price and power consumption of a communications terminal. Application of a battery-free and low-cost passive Internet of Things device has become critical for a cellular Internet of Things, which enriches types and a quantity of 5G network-connected terminals, thereby truly achieving the internet of everything. The passive internet of things devices may be based on an existing zero-power device, such as an RFID technology, and may be extended based on this to be applicable to the cellular internet of things.

To facilitate better understanding of embodiments of this application, classification of zero-power terminals related to this application is described.

Zero-power terminals may be classified into the following types depending on energy sources and use manners of the zero-power terminals.

(1) Passive zero-power terminal

The zero-power terminal does not require a built-in battery. When the zero-power terminal is close to a network device (for example, a reader/writer of an RFID system), the zero-power terminal is located in a near field range formed through antenna radiation of the network device. Therefore, an antenna of the zero-power terminal generates an induced current through electromagnetic induction, and the induced current drives a low-power chip circuit of the zero-power terminal, to demodulate a forward link signal, perform signal modulation for a backward link, and so on. In view of a backscatter link, the zero-power terminal transmits a signal in a backscatter manner.

It may be learned that the passive zero-power terminal drives a forward link or a reverse link without a built-in battery, making it a true zero-power terminal.

The passive zero-power terminal does not require a battery, and has very simple radio frequency circuit and baseband circuit. For example, it does not require components such as a lownoise amplifier (LNA), a power amplifier (PA), a crystal oscillator, and an analog-to-digital converter (Analog-to-Digital Converter, ADC). Therefore, the passive zero-power terminal has many advantages such as a small size, a light weight, low costs, and a long service life.

(2) Semi-passive zero-power terminal

The semi-passive zero-power terminal also does not require a conventional battery, but can harvest energy of radio waves by using an RF energy harvesting module, and store the harvested energy in an energy storage unit (for example, a capacitor). After obtaining the energy, the energy storage unit may drive a low-power chip circuit of the zero-power terminal, to demodulate a forward link signal, perform signal modulation for a backward link, and so on. In view of a backscatter link, the zero-power terminal transmits a signal in a backscatter manner.

It may be learned that the semi-passive zero-power terminal drives a forward link or a reverse link without a built-in battery. Although the energy stored in the capacitor is used during operation, the energy comes from the radio energy harvested by the energy harvesting module. Therefore, the semi-passive zero-power terminal is also a true zero-power terminal.

The semi-passive zero-power terminal inherits many advantages of the passive zero-power terminal, and therefore has many advantages such as a small size, a light weight, low costs, and a long service life.

(3) Active zero-power terminal

In some scenarios, a used zero-power terminal may alternatively be an active zero-power terminal, and a battery may be built in this type of terminal. The battery is configured to drive a low-power chip circuit of the zero-power terminal, to demodulate a forward link signal, modulate a backward link signal, and so on. However, in view of a backscatter link, the zero-power terminal transmits a signal in a backscatter manner. Therefore, zero power being consumed by this type of terminal is mainly reflected in that signal transmission on a reverse link does not require power of the terminal, but instead relies on backscatter.

The active zero-power terminal supplies power to an RFID chip by using the built-in battery, to increase a read/write distance of the tag, thereby improving communication reliability. Therefore, the active zero-power terminal is applied to some scenarios in which a high requirement is imposed on a communication distance and a read delay.

Some zero-power terminals, such as a semi-passive zero-power terminal or an active zero-power terminal, may have an ability of active transmission, that is, may perform communication on the reserve link in an active transmission manner in addition to a backscatter manner.

To facilitate better understanding of embodiments of this application, a positioning solution related to this application is described.

To support various requirements such as public safety services, emergency warning, navigation and item tracking, and asset management, wireless positioning technologies have attracted widespread attention and research, such as a plurality of positioning methods, based on timing (for example, time difference of arrival (Time Difference of Arrival, TDOA), and round trip time (Round Trip Time, RTT)), an angle (for example, an angle of departure (Angle of Departure, AoD), an angle of arrival (Angle of Arrival, AoA), a horizontal angle of arrival, and a vertical angle of arrival), and a phase, used in systems based on Wi-Fi, Bluetooth, 4G/5G cellular communication, and the like.

Timing measurement involves calculating a distance between a positioning target and reference nodes by measuring arrival time or a time difference of arrival of reference signals. A location of the positioning target (for example, a terminal device) is calculated based on a distance between the positioning target and a plurality of reference nodes (for example, transmission reception points (Transmission Reception Point, TRP)). Typically, a TDOA-based positioning method may be as shown in part (a) of FIG. 6. A positioning target may determine corresponding hyperbolas based on time differences of arrival of signals from a plurality of reference nodes, and an intersection of the hyperbolas is an estimated location of the positioning target. This is a typical multilateration (Multilateration) problem, and there are several classical algorithms, such as a Taylor expansion method and a Chan algorithm.

Angle measurement involves determining an angle of departure/arrival of a signal by using an antenna array, and then calculating a location of a positioning target (for example, a terminal device) based on a distance between the positioning target and a plurality of reference nodes (for example TRPs). A typical positioning method based on a downlink angle of departure (Downlink Angle of Departure, DL-AoD) may be as shown in part (b) of FIG. 6, in which projections of a distance between the TRP i and the terminal device on the x-axis and the y-axis form two perpendicular edges of a right-angled triangle. According to a trigonometric function, a relationship between the edges and the downlink angle of departure $\theta_i$ may be expressed as: $X_i - x_{UE} = (y_i - y_{UE}) \times \tan \theta_i$. Since there are a plurality of TRPs, a plurality of constraint equations may be obtained, and coordinates ($x_{UE}$, $y_{UE}$) of the positioning target may be obtained by solving the system of equations.

Accuracy of timing measurement depends on a bandwidth of a reference signal, and a larger bandwidth indicates higher accuracy. Angle measurement depends on arrangement of an antenna array, and a larger quantity of antennas indicates higher angle accuracy. However, a zero-power device (such as an electronic tag) has zero-power or ultra-low-power requirements, which may not support sufficient signal bandwidth and antenna configurations. Therefore, it is necessary to research how to implement positioning in a zero-power system, especially in a scenario involving deployment of a large quantity of zero-power devices.

To facilitate better understanding of embodiments of this application, a problem to be resolved in this application is described.

Based on characteristics of zero-power devices, such as being battery-free, maintenance-free, and low-cost, zero-power devices are highly suitable for large-scale deployment and scenarios with special requirements, such as goods in logistics, animals on livestock farms, or critical components in high-temperature and high-pressure environments. However, a current positioning solution (based on time measurement and angle measurement) requires a relatively large bandwidth and relatively complex antenna configuration, which is not fully applicable to a zero-power system. In addition, if a large quantity of zero-power devices transmit backscatter signals on a same resource at a same instant, mutual interference inevitably occurs. For example, in a case of M signal sources and N zero-power devices, there may be a maximum of M*N different backscatter signals. If there is a lot of interference, computation and measurement on a receiving end of the backscatter signals may be highly challenged, and final positioning accuracy may be affected.

In view of the foregoing problems, this application provides a positioning solution. In a positioning scenario involving a zero-power device, each zero-power device may determine a time domain resource, a frequency domain resource, a spatial domain resource, or a code domain resource for backscattering to be performed by the zero-power device, which effectively avoids interference caused by a plurality of zero-power devices performing backscattering on a same resource, and thus may improve reception and measurement performance at a receiving end of a backscatter signal and improve positioning accuracy.

To facilitate understanding of the technical solutions in embodiments of this application, the following describes the technical solutions in this application in detail by using specific embodiments. The following related technologies, as optional solutions, may be randomly combined with the technical solutions of embodiments of this application, all of which fall within the protection scope of embodiments of this application. Embodiments of this application include at least part of the following content.

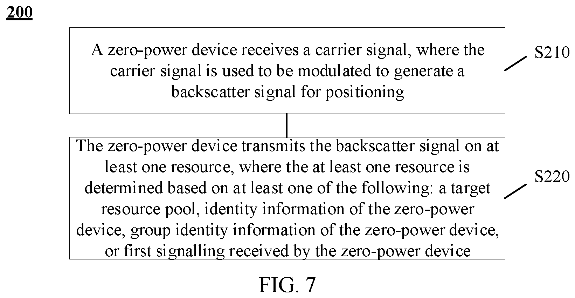

FIG. 7 is a schematic flowchart of a positioning method 200 according to an embodiment of this application. As shown in FIG. 7, the positioning method 200 may include at least part of the following content.

In S210, a zero-power device receives a carrier signal, where the carrier signal is used to be modulated to generate a backscatter signal for positioning.

In S220, the zero-power device transmits the backscatter signal on at least one resource, where the at least one resource is determined based on at least one of the following: a target resource pool, identity information of the zero-power device, group identity information of the zero-power device, or first signalling received by the zero-power device.

In embodiments of this application, in a positioning scenario involving a zero-power device, the zero-power device may determine a resource for transmitting a backscatter signal, based on at least one of the following: a target resource pool, identity information of the zero-power device, group identity information of the zero-power device, or first signalling received by the zero-power device. In other words, each zero-power device may determine a time domain resource, a frequency domain resource, a spatial domain resource, or a code domain resource for backscattering to be performed by the zero-power device, which effectively avoids interference caused by a plurality of zero-power devices performing backscattering on a same resource, and thus may improve reception and measurement performance at a receiving end of a backscatter signal and improve positioning accuracy.

In embodiments of this application, the zero-power device may also be referred to as a zero-power tag, a zero-power electronic tag, a reference tag, an electronic tag, or the like. This is not limited in embodiments of this application.

In embodiments of this application, the zero-power device may obtain energy through energy harvesting, to be used for communication, information collection, and processing. The energy harvested by the zero-power device may be solar energy, wind energy, geothermal energy, or the like, or may be energy of an energy supply signal transmitted by an energy supply node.

In embodiments of this application, the carrier signal may also be referred to as an incident wave signal for a backscatter signal, and the two terms may be interchanged in embodiments of this application. Specifically, the zero-power device may receive the carrier signal in an envelope detection manner, and the zero-power device modulates the carrier signal and generates a backscatter signal.

In some embodiments, the zero-power device is an anchor device that participates in positioning, or the zero-power device is a device (for example, a target device) positioning required to be posistioned. Optionally, in a case in which the zero-power device is an anchor device that participates in positioning, the anchor device may communicate, by using a PC5 interface, with a device requiring for positioning.

In embodiments of this application, "anchor device" may also be referred to as "anchor terminal", or "road side unit (Road Side Unit, RSU)", or "another terminal", or "relay terminal", or "positioning reference node or positioning reference device". This is not limited in this application.

It should be noted that in a positioning process, a to-be-located target device is required to measure positioning reference signals transmitted by as many reference nodes as possible, in order to obtain accurate location information. If the reference nodes are base stations or APs, deploying a large quantity of base stations or APs is very costly. However, if the reference nodes are zero-power devices (such as electronic tags), the reference nodes may be deployed massively, for example, reference nodes may be fixed at an interval of 1 m or even 0.5 m. Therefore, low cost and high accuracy can be achieved, while also making up for shortcomings of some positioning methods (such as a global navigation satellite system (Global Navigation Satellite System, GNSS), and a cellular TDOA) in indoor scenarios.

In some embodiments, in a case in which the zero-power device is an anchor device that participates in positioning, each anchor device is fixed at a specific location. Optionally, location information of the anchor device may be in the form of global coordinates, such as latitude, longitude, and altitude; or may be in the form of local coordinates or relative coordinates, such as coordinates (x, y) or a floor number within a building. Optionally, the location information of the anchor device is stored in the corresponding anchor device. The location information of the anchor device is also stored in a positioning device (for example, a base station, an access and mobility management function (Access and Mobility Management Function, AMF), or a location management function (Location Management Function, LMF)) or a server on a network side, and the location information is in a one-to-one correspondence with an identity (Identity, ID) of the anchor device. Optionally, during a positioning process, a node that stores the location information may transmit the required location information to a specific node (a node that calculates a target location) if needed.

In some embodiments, when the zero-power device performs backscatter communication, a frequency of a backscatter signal may be the same as a frequency of the carrier signal (also referred to as an incident wave signal) or may has a frequency offset. In the case of the frequency offset, offsets of all zero-power devices may be the same or different.

In some embodiments, when the zero-power device performs backscatter communication, a backscatter signal may be triggered immediately after the carrier signal (also referred to as an incident wave signal) is received, or may be triggered after a specific time offset. In the case of the time offset, offsets of all zero-power devices may be the same or different.

In some embodiments, a signal source of the carrier signal may be a base station, an AP, a TRP, a terminal, or the like. Certainly, a signal source of the carrier signal may alternatively be another device, which is not limited in embodiments of this application.

In some embodiments, the carrier signal is one of the following: a positioning reference signal, a measurement signal, a reference signal, or a reference sequence. Certainly, the carrier signal may alternatively be another signal, for example, an energy supply signal, which is not limited in embodiments of this application.

In some embodiments, a positioning measurement quantity corresponding to the backscatter signal includes but is not limited to at least one of the following: reference signal received power (Reference Signal Received Power, RSRP), received signal strength indicator (Received Signal Strength Indication, RSSI), signal to interference plus noise ratio (Signal to Interference plus Noise Ratio, SINR), phase, a line of sight (Line Of Sight, LOS) indication, timing, or an angle. The LOS indicator indicates whether being a LOS path or not, or the LOS indicator indicates a possibility of being an LOS path.

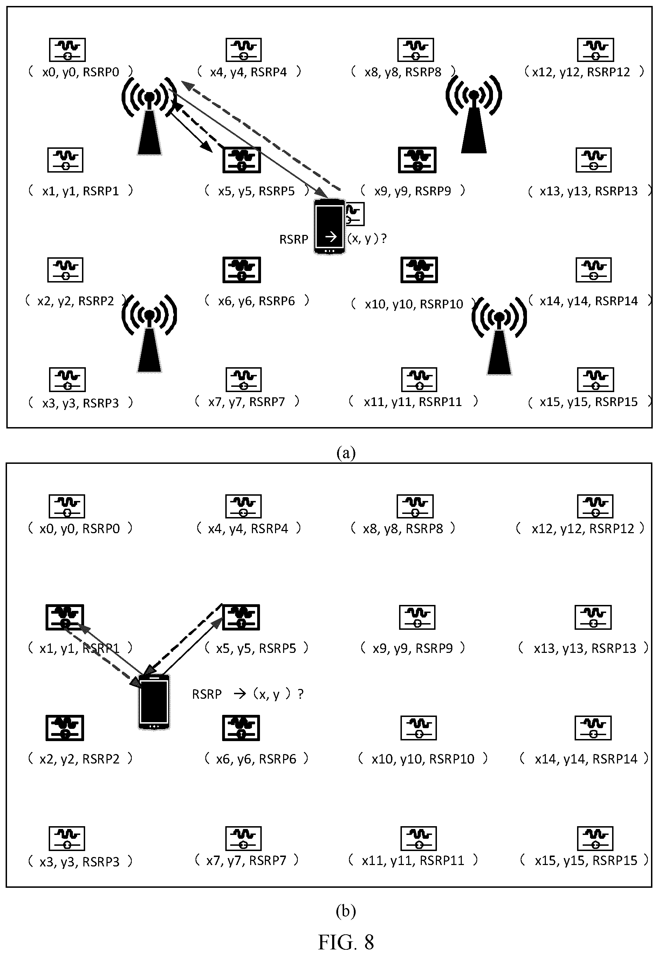

In some embodiments, to acquire location information of a target node (target node), some positioning reference nodes (reference node) may be fixed at some known locations, where the target node may refer to a mobile phone, a zero-power electronic tag (Tag), or another node in a network, and the reference node may refer to a base station in a cellular system, an AP in a Wi-Fi system, or a zero-power electronic tag (tag). Specifically, as shown in FIG. 8, the reference node being a zero-power electronic tag is used as an example. The zero-power electronic tag may receive a carrier signal transmitted by an energy supply node or another UE, and may transmit a backscatter signal generated after modulating the carrier signal. Alternatively, the zero-power electronic tag acquires energy in a manner of harvesting energy such as light energy and kinetic energy, and directly actively transmits a carrier signal (without backscattering a signal). In this case, a resource used for transmitting the carrier signal may also be determined based on embodiments of this application. Based on measurement results of backscatter signals transmitted by different zero-power electronic tags, such as one or more of the following information: RSRP, RSSI, SINR, phase (phase), an LOS indicator, timing, or an angle, some zero-power electronic tags closer to the target node (for example, UE) may be selected by using a clustering algorithm, and a location of the target node (for example, UE) may be determined based on location information of the selected zero-power electronic tags.

As shown in part (a) of FIG. 8, there are signal sources, such as base stations or APs, that may be used for power supply or positioning measurement/calculation. The base station or AP may transmit a signal, and after being backscattered by a zero-power electronic tag, the signal returns to a positioning node for measurement. Similarly, a target node (the UE whose location information is required to be determined) may also backscatter a signal transmitted by the positioning node for measurement by the positioning node. The positioning node compares a measurement result of the target node with measurement results of other zero-power electronic tags, and selects a zero-power electronic tag closest to the target node by using the clustering algorithm, thereby determining a location of the target node.

As shown in part (b) of FIG. 8, there are no signal sources, such as base stations or APs. The target node (the UE whose location information is required to be determined) transmits a signal, and after being backscattered by a zero-power electronic tag, the signal returns to the target node for measurement by the target node. One or more zero-power electronic tags with a highest signal strength may be selected as the closest zero-power electronic tag, thus determining the location of the target node.

It should be noted that, in FIG. 8, measurement of RSRP is used as an example, but other measurement quantities such as a RSSI, SINR, phase (phase), phase difference (phase difference), LOS indicator, time, angle, and other information are not excluded, and a plurality of different measurement quantities may also be combined. The target node in part (a) of FIG. 8 may be a zero-power device, or a common device. However, since the target node in part (b) of FIG. 8 is required to actively transmit a signal and perform measurement, it is less likely that the target node is a zero-power device. In part (b) of FIG. 8, no additional positioning node is required, thereby achieving relatively simple deployment and relatively low costs. In part (a) of FIG. 8, the measurement is performed by the base station or AP. In part (b) of FIG. 8, the measurement is performed by a mobile phone, but the positioning (processes such as analyzing and performing clustering on measurement results, and estimating a target location) is performed by a base station, an AP, or a mobile phone. This requires reporting measurement results from different nodes together to a positioning entity.

Part (a) of FIG. 8 is used as an example. Each signal source #m in M signal sources measures a reference signal that is backscattered by a zero-power electronic tag #n to the signal source #m, for example, RSRP(n,m). After measurement by M = 4 signal sources, an RSRP vector with a length of M is obtained for each zero-power electronic tag #n. That is, RSRP(n) = [RSRP(n,1), RSRP(n,2), RSRP(n,3), RSRP(n,4)]. Similarly, for the target node (for example, the UE), a vector RSRP(target) = [RSRP(target,1), RSRP(target,2), RSRP(target,3), RSRP(target,4)] is also obtained. In this embodiment, the RSRP may also be replaced by other measurement results described above, for example, phase: phase(n) = [phase (n,1), phase (n,2), phase (n,3), phase (n,4)]; or a combination of a plurality of measurement results. For example, each signal source #m measures both a signal strength and a phase of a reference signal that is backscattered by the zero-power electronic tag #n to the signal source #m, with the measured signal strength and phase forming a vector with a length of M*2: Metric(n) = [RSRP(target,1), RSRP(target,2), RSRP(target,3), RSRP(target,4), phase (n,1), phase (n,2), phase (n,3), phase (n,4)]. In this embodiment, a sequence of measurement results in a vector is not limited, provided that a same structure is used for each zero-power electronic tag and the target node (for example, UE). For example, RSRP and phase measured by a first signal source may be placed before a result from a second signal source, that is, Metric(n) = [RSRP(target, 1), phase (n,1), RSRP(target,2), phase (n,2), RSRP(target,3), phase (n,3), RSRP(target,4), phase (n,4)].

In specific clustering algorithms, clustering metrics and a clustering algorithm may be mainly considered.

Clustering metrics: The measurement result vector described above, such as RSRP, may be directly used as the clustering metrics, or some variants of the measurement result vector may be used. For example, some excessively small results are removed. Assuming that the metric has a length of 4: RSRP(target) = [RSRP(target,1), RSRP(target,2), RSRP(target,3), RSRP(target,4)], but the result RSRP(target,3) that is obtained by a third signal source through measurement is very small and therefore may be removed, the remaining three may be retained, that is, RSRP(target) = [RSRP(target,1), RSRP(target,2), RSRP(target,4)]. This may prevent inaccurate elements from affecting clustering and interpolation performance, and may also reduce calculation complexity. Other examples may include Euclidean distance, Manhattan distance, Chebyshev distance, and the like between the target node (for example, UE) and the zero-power electronic tag. The Euclidean distance is used as an example. The Euclidean distance between the target node (for example, UE) and the zero-power electronic tag #n is a norm of a difference between corresponding RSRP vectors, as shown in Formula 1.

$$E_{(target,n)} = \sqrt{\sum_{m=1}^{M}\left(RSRP_{(target,m)} - RSRP_{(n,m)}\right)^2}$$ Formula 1

In the formula, $E_{(target,n)}$ denotes the Euclidean distance between the target node (for example, UE) and the zero-power electronic tag #n, $RSRP_{(target,m)}$ denotes RSRP between the target node and the signal source #m, $RSRP_{(n,m)}$ denotes RSRP between the zero-power electronic tag #n and the signal source #m, and M denotes a quantity of signal sources.

Optionally, in Formula 1, in calculating the Euclidean distance, measurement results from some specific signal sources may be first excluded from each RSRP vector.

Clustering algorithm: Used to determine one or more zero-power electronic tags whose measurement result characteristics are similar to those of the target node. Some common algorithms include KNN, K-means, DBSCAN (Density-based spatial clustering of applications with noise), spectral clustering, and the like.

Optionally, K zero-power electronic tags are selected from N zero-power electronic tags by using the clustering algorithm. The location of the target node may be obtained by interpolation based on locations of the selected K zero-power electronic tags. This requires the design of an interpolation weight. A method for determining the interpolation weight may be calculated according to the Euclidean distance, as shown in Formula 2.

$$w_{(t\arg et,k)} = \frac{1/E'^2_{(t\arg et,k)}}{\sum_{i=1}^{K} 1/E'^2_{(t\arg et,i)}} \qquad \text{Formula 2}$$

In the formula, $w_{(target,k)}$ denotes an interpolation weight for a $k^{th}$ zero-power electronic tag for calculating the location of the target node, $E'_{(t\arg et,i)}$ denotes the Euclidean distance between the target node and the zero-power electronic tag #i, and K denotes a quantity of zero-power electronic tags selected from the N zero-power electronic tags.

In part (b) of FIG. 8, since there is no signal source, the target node may measure a signal that is backscattered by each zero-power electronic tag, for example, RSRP. K zero-power electronic tags (no Euclidean distance is calculated) whose RSRP is relatively high are selected by using a clustering method or the like, and then the location of the target node is obtained by interpolation.

Optionally, the location information of the zero-power electronic tag may be directly carried in modulated information backscattered by the zero-power electronic tag. For example, the location information (x, y) may be encoded into a binary sequence in a specific manner and carried in a backscatter signal through OOK modulation. Alternatively, the location information may be indirectly carried in an ID or other information. For example, when a network deploys zero-power electronic tags, it records an ID and location information (x, y) of each zero-power electronic tag, thus forming a one-to-one correspondence table. In this case, only ID information is required to be carried in the backscattered modulated information, and the network may determine corresponding location information of each zero-power electronic tag based on the correspondence table.

In some embodiments, the zero-power device may be in a one-to-one correspondence with a resource used for transmitting a backscatter signal, that is, each zero-power device may determine a resource used for transmitting a backscatter signal. Alternatively, there may be a one-to-many correspondence between the zero-power device and a resource used for transmitting a backscatter signal, that is, each zero-power device may determine a plurality of resources used for transmitting a backscatter signal. Alternatively, there may be a many-to-one correspondence between the zero-power device and a resource used for transmitting a backscatter signal, that is, a plurality of zero-power devices may determine a same resource used for transmitting a backscatter signal.

It should be noted that, in a case in which there is a many-to-one correspondence between the zero-power device and a resource used for transmitting a backscatter signal, a signal source transmitting a carrier signal may be relatively far from some zero-power devices, and these zero-power devices may generally not be used simultaneously. Therefore, these zero-power devices may share a same resource.

In some embodiments, in a case in which the at least one resource is determined at least based on the first signalling received by the zero-power device, the first signalling is transmitted by a device (for example, a target device) requiring for positioning, or the first signalling is transmitted by a device (for example, a positioning device) that performs a positioning operation, or the first signalling is transmitted by a network device (for example, an AMF entity, a base station, an LMF entity, or the like) that participates in positioning. That is, before positioning, a communication connection is established between the zero-power device and the device that transmits the first signalling, so that the use of resources may be maximized based on the first signalling.

For example, the device (for example, a positioning device) that performs a positioning operation may determine a location of the target device based on the backscatter signal.

In some embodiments, in a case in which the at least one resource is determined at least based on the target resource pool, the target resource pool includes but is not limited to at least one of the following: a target time domain resource, a target frequency domain resource, a target spatial domain resource, or a target code domain resource. In other words, the at least one resource may be a resource in at least one of the following: time domain, frequency domain, spatial domain, or code domain.

Specifically, for example, a time domain resource and a frequency domain resource in the target resource pool may be orthogonal to each other.

Specifically, for example, a time domain resource and a spatial domain resource in the target resource pool may be orthogonal to each other.

Specifically, for example, a time domain resource and a code domain resource in the target resource pool may be orthogonal to each other.

In some embodiments, the target resource pool is a resource pool used for positioning. Certainly, the target resource pool may alternatively be another resource pool, which is not limited in embodiments of this application.

In some embodiments, the target resource pool may include one or more resource sets.

In some embodiments, the target resource pool may also be referred to as a resource set combination, or a similar name, which is not limited in this application.

In some embodiments, the target time domain resource is part or all of time domain resources within a target time window, or the target time domain resource is a time domain resource that meets a first preset rule within a target time window.

In some embodiments, the target time window is a time domain resource repeated with a period of T in time domain. Optionally, the period T may be specified in a protocol, or the period T may be predefined, or the period T may be pre-configured by the zero-power device, or the period T may be pre-configured or indicated by a network device that participates in positioning.

In some embodiments, the target time window is consecutive L time units after the carrier signal is received by the zero-power device, where L is a positive integer. Optionally, L may be specified in a protocol, or L may be predefined, or L may be pre-configured by the zero-power device, or L may be pre-configured or indicated by a network device that participates in positioning.

In some embodiments, the first preset rule is associated with an index of a target time unit. Optionally, the target time unit is one of the following: a slot, a symbol, a subframe, or a frame.

In some embodiments, the first preset rule is: mod (the index of the target time unit, P) = 0, where P is a positive integer. For example, if the target time unit is a slot, and P = 10, the first preset rule is: mod (slot_index, 10) = 0. Optionally, the first preset rule and a parameter in the first rule may be specified in a protocol, pre-configured, or pre-configured or indicated by a network device for positioning.

In some embodiments, the target frequency domain resource is at least one frequency domain resource combination, where the frequency domain resource combination includes at least two frequencies, or the frequency domain resource combination includes at least two subcarriers, or the frequency domain resource combination includes at least two carriers, or the frequency domain resource combination includes at least two sub-bands, or the frequency domain resource combination includes at least two frequency bands. For example, the frequency domain resource combination is {f1=2505MHz, f2=2408MHz}.

In some embodiments, the target frequency domain resource is at least one frequency domain resource that has a frequency offset relative to a frequency of the carrier signal. For example, the at least one frequency offset is denoted by fd1 and f2, where {fd1=0MHz, f2=3MHz}.

In some embodiments, the target frequency domain resource is a frequency domain resource that meets a second preset rule. Optionally, the second preset rule is associated with an index of a target frequency unit. Alternatively, the second preset rule is associated with a frequency domain offset of a target frequency unit relative to the carrier signal. Optionally, the target frequency unit is one of the following: a frequency, a subcarrier, a carrier, a sub-band, or a frequency band.

In some embodiments, the second preset rule is: $g(i) = 12*n + i$, where n denotes a physical resource block (physical resource block, PRB) index, and i denotes a subcarrier index, or i denotes a subcarrier offset. Optionally, the second preset rule and a parameter in the second rule may be specified in a protocol, pre-configured, or pre-configured or indicated by a network device for positioning.

In some embodiments, the target spatial domain resource is one or more direction combinations, each including at least two azimuth angles. For example, the at least two azimuth angles are a1, a2, a3, and a4, where {a1=0°, a2=90°, a3=180°, a4=270°}.

In some embodiments, the target spatial domain resource is at least one direction that has an angular offset relative to a direction of the carrier signal. For example, the at least one angular offset is denoted by ad1 and ad2, where {ad1=0°, ad2=90°}.

In some embodiments, the target spatial domain resource is a direction that is quasi-co-located (Quasi-co-located, QCL) with a direction of the carrier signal.

In some embodiments, the target code domain resource is one or more sequence combinations, each including at least two sequences.

The at least two sequences are orthogonal or quasi-orthogonal.

It should be noted that, regarding orthogonal sequences, for example, walsh sequences [1 1 1 1] and [1 -1 1 -1] are orthogonal to each other. Cross-correlation (inner product) between the two sequences is 0, while autocorrelation of the two sequences is relatively large, which is 4. Regarding quasi-orthogonal sequences, for example, m-sequences with a length of 7: [0 1 0 0 1 1 1] and [1 0 1 0 0 1 1], when converting the binary values into values of +1 or -1, are converted into [1, -1, 1, 1, -1, -1, -1] and [-1, 1, -1, 1, 1, -1, -1], respectively. Cross-correlation (inner product) between the two sequences is not 0, but is very small.

In some embodiments, the target resource pool is specified in a protocol, or the target resource pool is predefined, or the target resource pool is pre-configured by the zero-power device, or the target resource pool is pre-configured or indicated by a network device that participates in positioning.

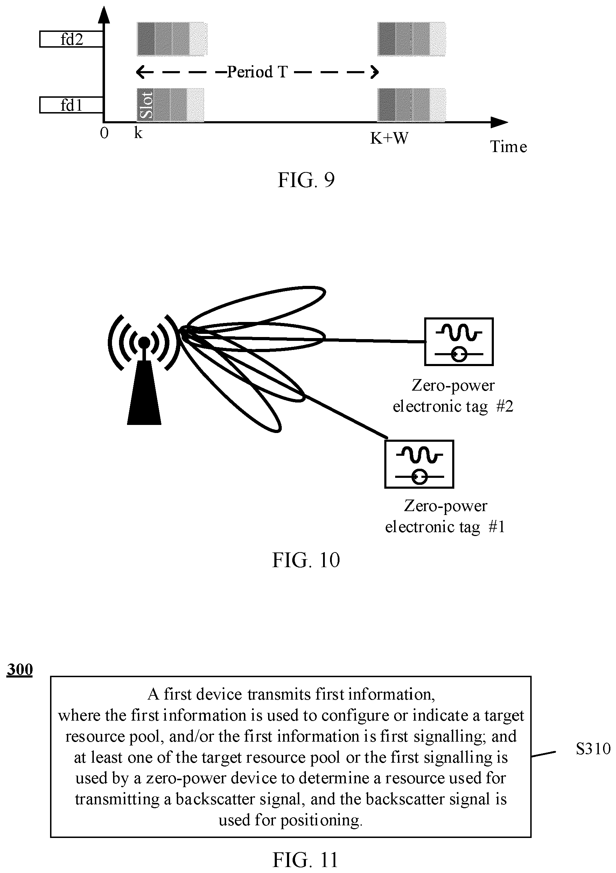

In some embodiments, orthogonal resources may be determined from the target resource pool based on time domain + frequency domain. As shown in FIG. 9, time domain configuration information indicates a window W with a period of T, where the window W includes L = 4 slots (slot), and a start offset of the window is denoted by k. Frequency domain configuration information indicates a frequency offset relative to the carrier signal as {fd1=0MHz, fd2=3MHz} (frequency domain information may be determined with reference to spectrum characteristics, local spectrum specifications, characteristics of a zero-power component, and the like. In this case, it may be determined that a target resource pool within each period of T is $N_{total}$ = 2L. The power supply node may start to transmit an energy supply signal at an instant (for example, an instant k-1) prior to a time domain window corresponding to the target resource pool, so that the zero-power device wakes up in advance and/or stores a specific amount of energy. The zero-power device transmits, at an instant of a resource selected by the zero-power device, a backscatter signal used for positioning. For example, if the zero-power device selects a resource that is at an instant k+1 and on a frequency fd1 as a resource for transmitting a backscatter signal, the zero-power device may start to receive an energy supply signal at an instant k-1 to store some energy and then transmit, at the instant k+1, the backscatter signal for positioning.

In some embodiments, orthogonal resources may be determined from the target resource pool based on time domain + spatial domain. It is assumed that time domain configuration information indicates L consecutive slots (resources before slot #n and after slot #n + L × 10 are excluded), whose slot numbers satisfy a condition mod(slot_index, 10) = 0, after a slot (slot #n) when the zero-power device receives the carrier signal, and a spatial domain resource is a direction that is quasi-co-located (QCL) with a direction of the carrier signal. Herein, assuming that a signal source transmits carrier signals in X different directions by turns, and the zero-power device is required to perform backscatter according to incident directions of the carrier signals, it may be determined that the target resource pool (that is, total time-space orthogonal resources) is: Ntotal = L*X. As shown in FIG. 10, a base station, serving as the signal source, transmits carrier signals in four different directions, with relatively small cross interference between the different directions. For example, an electronic tag 1 (Tag #1) in a direction mainly receives energy from the direction, with little energy received from the other three directions. Similarly, an electronic tag 2 (Tag #2) also mainly receives signals from a direction pointing to the electronic tag 2. In this way, spatial orthogonality can be implemented.

In some embodiments, orthogonal resources may be determined from the target resource pool based on time domain + code domain. Assuming that time domain configuration information indicates all slot resources within a window W with a length of L slots, where a start position of the window W may be k-th slot (that is, slot #n+k) after a slot (slot #n) when the zero-power device receives the carrier signal transmitted by the signal source, and a code domain resource is Y different orthogonal sequences, it may be determined that the target resource pool (that is, total time-space orthogonal resources) is: Ntotal = L*Y.

In some embodiments, the at least one resource is a resource randomly selected by the zero-power device from the target resource pool. In other words, the zero-power device randomly selects a resource used for transmitting a backscatter signal from the target resource pool. Optionally, each zero-power device participating in positioning randomly selects, from the target resource pool in a target probability distribution manner, a resource used for transmitting a backscatter signal.

Specifically, for example, the target probability distribution manner is a uniform distribution manner, or the target probability distribution manner is a binomial distribution manner, or the target probability distribution manner is a Poisson distribution manner. Certainly, the target probability distribution manner may alternatively be another distribution manner. This is not limited in embodiments of this application.

In some embodiments, in a case in which the at least one resource is determined based on the target resource pool and the identity information of the zero-power device, some or all of bits in an identity (Identity, ID) of the zero-power device are used to determine the at least one resource from the target resource pool.

In some embodiments, in a case in which the at least one resource is determined based on the identity information of the zero-power device and the first signalling received by the zero-power device, the first signalling is used to configure or indicate the target resource pool, and some or all of bits in the identity information of the zero-power device are used to determine the at least one resource from the target resource pool.

In some embodiments, N bits in the ID of the zero-power device are used to select a resource numbered $ID_{msb\_N}$ from the target resource pool, where $ID_{msb\_N}$ denotes a decimal value represented by the N bits in the ID of the zero-power device, and N is a positive integer.

Optionally, the N bits may be first N bits in the ID of the zero-power device, or the N bits may be last N bits in the ID of the zero-power device, or the N bits may be middle N bits in the ID of the zero-power device, or the N bits may be first N bits at even-numbered locations of the ID of the zero-power device, or the N bits may be last N bits at even-numbered locations of the ID of the zero-power device, or the N bits may be first N bits at odd-numbered locations of the ID of the zero-power device, or the N bits may be last N bits at odd-numbered locations of the ID of the zero-power device.

Specifically, for example, the ID of the zero-power device occupies 10 bits. For example, the ID of the zero-power device is 1001101101. A decimal number corresponding to first N = 5 bits 10011 is 32 + 2 + 1 = 35, then $ID_{msb\_5}$ = 35 S.

In some embodiments, the ID of the zero-power device is used to select a resource numbered $mod(ID, N_{total})$ from the target resource pool, where $N_{total}$ denotes a total quantity of resources in the target resource pool, and mod denotes a modulo operation.

In some embodiments, the ID of the zero-power device includes at least one of the following: a first bit, a second bit, a third bit, or a fourth bit, where the first bit is used to select a time domain resource from the target resource pool, the second bit is used to select a frequency domain resource from the target resource pool, the third bit is used to select a spatial domain resource from the target resource pool, and the fourth bit is used to select a code domain resource from the target resource pool.

Specifically, for example, the target resource pool includes X slots and Y code domain resources. First $N_1$ bits in the ID of the zero-power device are used to select a time domain resource from the X slots, last $N_2$ bits in the ID of the zero-power device are used to select a code domain resource from the Y code domain resources, and both X and Y are positive integers.

In some embodiments, in a case in which the at least one resource is determined based on the target resource pool and the group identity information of the zero-power device, some or all of bits in a group identity of the zero-power device are used to determine a first resource set from the target resource pool, and the at least one resource is a resource selected by the zero-power device from the first resource set. For example, the at least one resource is a resource randomly selected by the zero-power device from the first resource set, or the at least one resource is a resource selected by the zero-power device from the first resource set according to a specific rule. That is, in this embodiment, zero-power devices may be grouped, and conflicts between resource sets in the target resource pool may be resolved using some or all of bits in the group identity of the zero-power device, while conflicts within a resource set may be resolved through selection by the zero-power devices.

In some embodiments, in a case in which the at least one resource is determined based on the group identity information of the zero-power device and the first signalling received by the zero-power device, the first signalling is used to configure or indicate the target resource pool, some or all of bits in the group identity of the zero-power device are used to determine a first resource set from the target resource pool, and the at least one resource is a resource selected by the zero-power device from the first resource set. For example, the at least one resource is a resource randomly selected by the zero-power device from the first resource set, or the at least one resource is a resource selected by the zero-power device from the first resource set according to a specific rule. That is, in this embodiment, zero-power devices may be grouped, and conflicts between resource sets in the target resource pool may be resolved using some or all of bits in the group identity of the zero-power device, while conflicts within a resource set may be resolved through selection by the zero-power devices.

Specifically, the target resource pool may include one or more resource sets.

In some embodiments, S bits in the group identity of the zero-power device are used to select a resource set numbered $ID^{set}_{msb\_s}$ from the target resource pool, where $ID^{set}_{msb\_s}$ denotes a decimal value represented by the S bits in the group identity of the zero-power device, and S is a positive integer.

Optionally, the S bits may be first S bits in the group identity of the zero-power device, or the S bits may be last S bits in the group identity of the zero-power device, or the S bits may be middle S bits in the group identity of the zero-power device, or the S bits may be first S bits at even-numbered locations of the group identity of the zero-power device, or the S bits may be last S bits at even-numbered locations of the group identity of the zero-power device, or the S bits may be first S bits at odd-numbered locations of the group identity of the zero-power device, or the S bits may be last S bits at odd-numbered locations of the group identity of the zero-power device.

In some embodiments, the group identity of the zero-power device is used to select a resource set numbered $mod(Group\ ID, N_{set\_total})$ from the target resource pool, where Group ID denotes the group identity of the zero-power device, $N_{set\_total}$ denotes a total quantity of resource sets in the target resource set, and mod denotes a modulo operation.

In some embodiments, in a case in which the at least one resource is determined based on the first signalling received by the zero-power device, the first signalling is used to configure or indicate at least one of a time domain resource, a frequency domain resource, a spatial domain resource, or a code domain resource used by the zero-power device. That is, the first signalling may explicitly configure or indicate the at least one resource. In other words, in this embodiment, it is unnecessary to first determine a resource set and then select a resource for transmitting a backscatter signal from the resource set. Instead, it is only required to transmit a backscatter signal by using a resource indicated by the first signalling, which may be applicable to a case in which there is a relatively small quantity of zero-power devices.

In some embodiments, in a case in which the at least one resource is determined based on the first signalling received by the zero-power device, the first signalling is used to configure or indicate a second resource set, and the at least one resource is a resource selected by the zero-power device from the second resource set. For example, the at least one resource is a resource randomly selected by the zero-power device from the second resource set, or the at least one resource is a resource selected by the zero-power device from the second resource set according to a specific rule. That is, in this embodiment, the first signalling may be transmitted in a broadcast or multicast manner, allowing a plurality of zero-power devices to be configured with a same resource set (that is, the second resource set), and conflicts may be partially avoided through selection by the zero-power devices, which may avoid excessive signalling interactions, and may be applicable to scenarios in which there are a relatively large quantity of zero-power devices.

In some embodiments, in a case in which the at least one resource is determined based on the target resource pool and the first signalling received by the zero-power device, the first signalling is used to indicate resource identity information, and some or all of bits in the resource identity information are used to determine the at least one resource from the target resource pool. Optionally, the resource identity information may be a specific resource identifier.

In some embodiments, the resource identity information is an identifier used to select a positioning resource. Certainly, the resource identity information may alternatively be another identifier, which is not limited in embodiments of this application.

In some embodiments, K bits in the resource identity information are used to select a resource numbered $ID^{cpnfig}_{msb\_K}$ from the target resource pool, where $ID^{config}_{msb\_K}$ denotes a decimal value represented by the K bits in the resource identity information, and K is a positive integer.

Optionally, the K bits may be first K bits in the resource identity information, or the K bits may be last K bits in the resource identity information, or the K bits may be middle K bits in the resource identity information, or the K bits may be first K bits at even-numbered locations of the resource identity information, or the K bits may be last K bits at even-numbered locations of the resource identity information, or the K bits may be first K bits at odd-numbered locations of the resource identity information, or the K bits may be last K bits at odd-numbered locations of the resource identity information.

In some embodiments, the resource identity information is used to select a resource numbered $mod(ID_{config}, N_{total})$ from the target resource pool, where $ID_{config}$ denotes the resource identity information, $N_{total}$ denotes a total quantity of resources in the target resource pool, and mod denotes a modulo operation.

In some embodiments, the resource identity information includes at least one of the following: a fifth bit, a sixth bit, a seventh bit, or an eighth bit, where the fifth bit is used to select a time domain resource from the target resource pool, the sixth bit is used to select a frequency domain resource from the target resource pool, the seventh bit is used to select a spatial domain resource from the target resource pool, and the eighth bit is used to select a code domain resource from the target resource pool.

Specifically, for example, the target resource pool includes X slots and Y code domain resources, where first $W_1$ bits in the resource identity information are used to select a time domain resource from the X slots, last $W_2$ bits in the resource identity information are used to select a code domain resource from the Y code domain resources, and both X and Y are positive integers.

In some embodiments, in a case in which the at least one resource is determined based on the identity information of the zero-power device and the first signalling received by the zero-power device, time domain resource information may be determined based on the first signalling, and then a frequency domain resource may be selected, based on the identity information of the zero-power device, from frequency domain resources corresponding to the determined time domain resource information.

In some embodiments, in a case in which the at least one resource is determined based on the group identity information of the zero-power device and the first signalling received by the zero-power device, time domain resource information may be determined based on the first signalling, and then a frequency domain resource may be selected, based on the group identity information of the zero-power device, from frequency domain resources corresponding to the determined time domain resource information.

In some embodiments, in a case in which the at least one resource is determined based on the identity information of the zero-power device and the first signalling received by the zero-power device, time domain resource information may be determined based on the first signalling, and then a spatial domain resource may be selected, based on the identity information of the zero-power device, from spatial domain resources corresponding to the determined time domain resource information, or a code domain resource may be selected, based on the identity information of the zero-power device, from code domain resources corresponding to the determined time domain resource information.

In some embodiments, in a case in which the at least one resource is determined based on the group identity information of the zero-power device and the first signalling received by the zero-power device, time domain resource information may be determined based on the first signalling, and then a spatial domain resource may be selected, based on the group identity information of the zero-power device, from spatial domain resources corresponding to the determined time domain resource information, or a code domain resource may be selected, based on the group identity information of the zero-power device, from code domain resources corresponding to the determined time domain resource information.

In some embodiments, in a case in which the at least one resource is determined based on the first signalling received by the zero-power device, time domain resource information may be determined based on the first signalling, and then a frequency domain resource may be selected, according to a specific rule, from frequency domain resources corresponding to the determined time domain resource information; or a spatial domain resource may be selected, according to a specific rule, from spatial domain resources corresponding to the determined time domain resource information; or a code domain resource may be selected, according to a specific rule, from code domain resources corresponding to the determined time domain resource information.

Therefore, in embodiments of this application, in a positioning scenario involving a zero-power device, the zero-power device may determine a resource for transmitting a backscatter signal, based on at least one of the following: a target resource pool, identity information of the zero-power device, group identity information of the zero-power device, or first signalling received by the zero-power device. In other words, each zero-power device may determine a time domain resource, a frequency domain resource, a spatial domain resource, or a code domain resource for backscattering to be performed by the zero-power device, which effectively avoids interference caused by a plurality of zero-power devices performing backscattering on a same resource, and thus may improve reception and measurement performance at a receiving end of a backscatter signal and improve positioning accuracy.

The foregoing describes in detail the embodiment on the side of the zero-power device in this application with reference to FIG. 7 to FIG. 10. With reference to FIG. 11, the following describes in detail the embodiment on the configuration side in this application. It should be understood that the embodiment on the configuration side corresponds to the embodiment on the side of the zero-power device. For similar descriptions, reference may be made to the embodiment on the side of the zero-power device.

FIG. 11 is a schematic flowchart of a positioning method 300 according to an embodiment of this application. As shown in FIG. 11, the positioning method 300 may include at least part of the following content.

In S310, a first device transmits first information, where the first information is used to configure or indicate a target resource pool, and/or the first information is first signalling; and at least one of the target resource pool or the first signalling is used by a zero-power device to determine a resource used for transmitting a backscatter signal, and the backscatter signal is used for positioning.

In embodiments of this application, in a positioning scenario involving a zero-power device, the zero-power device may determine a resource for transmitting a backscatter signal, based on at least one of the following: a target resource pool, or first signalling. In addition, after acquiring the target resource pool and/or the first signalling, the zero-power device may determine, with reference to identity information of the zero-power device or group identity information of the zero-power device, the resource for transmitting a backscatter signal. In other words, each zero-power device may determine a time domain resource, a frequency domain resource, a spatial domain resource, or a code domain resource for backscattering to be performed by the zero-power device, which effectively avoids interference caused by a plurality of zero-power devices performing backscattering on a same resource, and thus can improve reception and measurement performance at a receiving end of a backscatter signal and improve positioning accuracy.

In some embodiments, the first device is a device (for example, a target device or a target node) requiring for positioning, or the first device is a device (for example, a positioning device or a positioning node) that performs a positioning operation, or the first device is a network device (for example, a gNB, an AMF entity, or an LMF entity) that participates in positioning. That is, before positioning, a communication connection is established between the zero-power device and the first device, so that the use of resources may be maximized.

In some embodiments, the first device may directly transmit the first information to the zero-power device, or the first device may transmit the first information to the zero-power device via another device.

In some embodiments, the first information may be carried by one of the following:

a carrier signal, a broadcast or multicast message, radio resource control (Radio Resource Control, RRC) signalling, medium access control control element (Media Access Control Control Element, MAC CE) signalling, downlink control information (Downlink Control Information, DCI), PC5-RRC signalling, or sidelink control information (Sidelink Control Information, SCI).

In some embodiments, a positioning measurement quantity corresponding to the backscatter signal includes at least one of the following: an RSRP, an RSSI, an SINR, a phase, a a line of sight LOS indicator, a timing, or an angle. The LOS indicator indicates whether being an LOS path or not, or the LOS indicator indicates a possibility of being an LOS path.

In some embodiments, the zero-power device is an anchor device that participates in positioning, or the zero-power device is a device (for example, a target device) requiring for positioning. Optionally, in a case in which the zero-power device is an anchor device that participates in positioning, the anchor device may communicate, by using a PC5 interface, with a device requiring for positioning.

In embodiments of this application, "anchor device" may also be referred to as "anchor terminal", or "road side unit (Road Side Unit, RSU)", or "another terminal", or "relay terminal", or "positioning reference node or positioning reference device". This is not limited in this application.

In some embodiments, in a case in which the first information is used to configure or indicate the target resource pool, the target resource pool includes at least one of the following: a target time domain resource, a target frequency domain resource, a target spatial domain resource, or a target code domain resource.

Specifically, for example, a time domain resource and a frequency domain resource in the target resource pool may be orthogonal to each other.

Specifically, for example, a time domain resource and a spatial domain resource in the target resource pool may be orthogonal to each other.

Specifically, for example, a time domain resource and a code domain resource in the target resource pool may be orthogonal to each other.

In some embodiments, the target resource pool may include one or more resource sets.

In some embodiments, the target resource pool may also be referred to as a resource set combination, or a similar name, which is not limited in this application.

In some embodiments, the target time domain resource is part or all of time domain resources within a target time window, or the target time domain resource is a time domain resource that meets a first preset rule within a target time window.

In some embodiments, the target time window is a time domain resource repeated with a period of T in time domain. Optionally, the period L may be specified in a protocol, or the period L may be predefined, or the period L may be pre-configured by the zero-power device, or the period L may be pre-configured or indicated by a network device that participates in positioning.

In some embodiments, the target time window is consecutive L time units after the carrier signal is received by the zero-power device, where L is a positive integer. Optionally, L may be specified in a protocol, or L may be predefined, or L may be pre-configured by the zero-power device, or L may be pre-configured or indicated by a network device that participates in positioning.

In some embodiments, the first preset rule is associated with an index of a target time unit. Optionally, the target time unit is one of the following: a slot, a symbol, a subframe, or a frame.

In some embodiments, the first preset rule is: mod (the index of the target time unit, P) = 0, where P is a positive integer. For example, if the target time unit is a slot, and P = 10, the first preset rule is: mod (slot_index, 10) = 0. Optionally, the first preset rule and a parameter in the first rule may be specified in a protocol, pre-configured, or pre-configured or indicated by a network device for positioning.

In some embodiments, the target frequency domain resource is at least one frequency domain resource combination, where the frequency domain resource combination includes at least two frequencies, or the frequency domain resource combination includes at least two subcarriers, or the frequency domain resource combination includes at least two carriers, or the frequency domain resource combination includes at least two sub-bands, or the frequency domain resource combination includes at least two frequency bands. For example, the frequency domain resource combination is {f1=2505MHz, f2=2408MHz}.

In some embodiments, the target frequency domain resource is at least one frequency domain resource that has a frequency offset relative to a frequency of the carrier signal. For example, the at least one frequency offset is denoted by fd1 and f2, where {fd1=0 MHz, f2=3 MHz}.

In some embodiments, the target frequency domain resource is a frequency domain resource that meets a second preset rule. Optionally, the second preset rule is associated with an index of a target frequency unit. Alternatively, the second preset rule is associated with a frequency domain offset of a target frequency unit relative to the carrier signal. Optionally, the target frequency unit is one of the following: a frequency, a subcarrier, a carrier, a sub-band, or a frequency band.

In some embodiments, the second preset rule is: $g(i) = 12*n + i$, where n denotes a physical resource block (physical resource block, PRB) index, and i denotes a subcarrier index, or i denotes a subcarrier offset. Optionally, the second preset rule and a parameter in the second rule may be specified in a protocol, pre-configured, or pre-configured or indicated by a network device for positioning.

In some embodiments, the target spatial domain resource is one or more direction combinations, each including at least two azimuth angles. For example, the at least two azimuth angles are a1, a2, a3, and a4, where {a1=0°, a2=90°, a3=180°, a4=270°}.

In some embodiments, the target spatial domain resource is at least one direction that has an angular offset relative to a direction of the carrier signal. For example, the at least one angular offset is denoted by ad1 and ad2, where {ad1=0°, ad2=90°}.

In some embodiments, the target spatial domain resource is a direction that is quasi-co-located (Quasi-co-located, QCL) with a direction of the carrier signal.

In some embodiments, the target code domain resource is one or more sequence combinations, each including at least two sequences.

The at least two sequences are orthogonal or quasi-orthogonal.

It should be noted that, regarding orthogonal sequences, for example, walsh sequences [1 1 1 1] and [1 -1 1 -1] are orthogonal to each other. Cross-correlation (inner product) between the two sequences is 0, while autocorrelation of the two sequences is relatively large, which is 4. Regarding quasi-orthogonal sequences, for example m-sequences with a length of 7: [0 1 0 0 1 1 1] and [1 0 1 0 0 1 1], when converting the binary values into values of +1 or -1, are converted into [1, -1, 1, 1, -1, -1, -1] and [-1, 1, -1, 1, 1, -1, -1], respectively. Cross-correlation (inner product) between the two sequences is not 0, but is very small.

In some embodiments, the target resource pool is a resource pool used for positioning.

In some embodiments, in a case in which the first information is the first signalling, the first signalling is used to configure or indicate at least one of a time domain resource, a frequency domain resource, a spatial domain resource, or a code domain resource used by the zero-power device. That is, the first signalling may explicitly configure or indicate the at least one resource. In other words, in this embodiment, it is unnecessary to first determine a resource set and then select a resource for transmitting a backscatter signal from the resource set. Instead, it is only required to transmit a backscatter signal by using a resource indicated by the first signalling, which may be applicable to a case in which there is a relatively small quantity of zero-power devices.

In some embodiments, in a case in which the first information is the first signalling, the first signalling is used to configure or indicate a second resource set, and the zero-power device selects a resource for transmitting the backscatter signal from the second resource set. For example, the at least one resource is a resource randomly selected by the zero-power device from the second resource set, or the at least one resource is a resource selected by the zero-power device from the second resource set according to a specific rule. That is, in this embodiment, the first signalling may be transmitted in a broadcast or multicast manner, allowing a plurality of zero-power devices to be configured with a same resource set (that is, the second resource set), and conflicts may be partially avoided through selection by the zero-power devices, which may avoid excessive signalling interactions, and may be applicable to scenarios in which there are a relatively large quantity of zero-power devices.

In some embodiments, in a case in which the first information is used to configure or indicate the target resource pool, and the first information is the first signalling, the first signalling is used to indicate resource identity information, and some or all of bits in the resource identity information are used to determine the at least one resource from the target resource pool. Optionally, the resource identity information may be a specific resource identifier.

In some embodiments, the resource identity information is an identifier used to select a positioning resource. Certainly, the resource identity information may alternatively be another identifier, which is not limited in embodiments of this application.

In some embodiments, K bits in the resource identity information are used to select a resource numbered $ID^{cpnfig}_{msb\_K}$ from the target resource pool, where $ID^{config}_{msb\_K}$ denotes a decimal value represented by the K bits in the resource identity information, and K is a positive integer.

Optionally, the K bits may be first K bits in the resource identity information, or the K bits may be last K bits in the resource identity information, or the K bits may be middle K bits in the resource identity information, or the K bits may be first K bits at even-numbered locations of the resource identity information, or the K bits may be last K bits at even-numbered locations of the resource identity information, or the K bits may be first K bits at odd-numbered locations of the resource identity information, or the K bits may be last K bits at odd-numbered locations of the resource identity information.

In some embodiments, the resource identity information is used to select a resource numbered $mod(ID_{config}, N_{total})$ from the target resource pool, where $ID_{config}$ denotes the resource identity information, $N_{total}$ denotes a total quantity of resources in the target resource pool, and mod denotes a modulo operation.

In some embodiments, the resource identity information includes at least one of the following: a fifth bit, a sixth bit, a seventh bit, or an eighth bit, where the fifth bit is used to select a time domain resource from the target resource pool, the sixth bit is used to select a frequency domain resource from the target resource pool, the seventh bit is used to select a spatial domain resource from the target resource pool, and the eighth bit is used to select a code domain resource from the target resource pool.

Specifically, for example, the target resource pool includes X slots and Y code domain resources, where first $W_1$ bits in the resource identity information are used to select a time domain resource from the X slots, last $W_2$ bits in the resource identity information are used to select a code domain resource from the Y code domain resources, and both X and Y are positive integers.

Therefore, in embodiments of this application, in a positioning scenario involving a zero-power device, the zero-power device may determine a resource for transmitting a backscatter signal, based on at least one of the following: a target resource pool, or first signalling. In addition, after acquiring the target resource pool and/or the first signalling, the zero-power device may determine, with reference to identity information of the zero-power device or group identity information of the zero-power device, the resource for transmitting a backscatter signal. In other words, each zero-power device may determine a time domain resource, a frequency domain resource, a spatial domain resource, or a code domain resource for backscattering to be performed by the zero-power device, which effectively avoids interference caused by a plurality of zero-power devices performing backscattering on a same resource, and thus can improve reception and measurement performance at a receiving end of a backscatter signal and improve positioning accuracy.

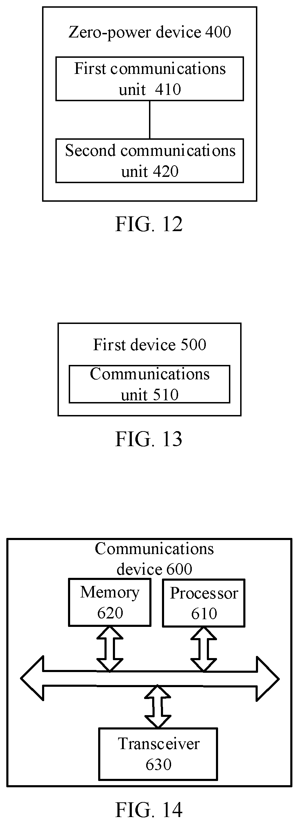

The foregoing describes method embodiments of this application in detail with reference to FIG. 7 to FIG. 11. The following describes apparatus embodiments of this application in detail with reference to FIG. 12 to FIG. 16. It should be understood that the apparatus embodiments correspond to the method embodiments. For similar descriptions, reference may be made to the method embodiments.

FIG. 12 is a schematic block diagram of a zero-power device 400 according to an embodiment of this application. As shown in FIG. 12, the zero-power device 400 includes:

a first communications unit 410, configured to receive a carrier signal, where the carrier signal is used to be modulated to generate a backscatter signal for positioning; and

a second communications unit 420, configured to transmit the backscatter signal on at least one resource,

where the at least one resource is determined based on at least one of the following: a target resource pool, identity information of the zero-power device, group identity information of the zero-power device, or first signalling received by the zero-power device.

In some embodiments, in a case in which the at least one resource is determined at least based on the target resource pool, the target resource pool includes at least one of the following: a target time domain resource, a target frequency domain resource, a target spatial domain resource, or a target code domain resource.

In some embodiments, the target time domain resource is part or all of time domain resources within a target time window, or the target time domain resource is a time domain resource that meets a first preset rule within a target time window.

In some embodiments, the target time window is a time domain resource repeated with a period of T in time domain.

The target time window is consecutive L time units after the carrier signal is received by the zero-power device, where L is a positive integer.

In some embodiments, the first preset rule is associated with an index of a target time unit.

In some embodiments, the target time unit is one of the following: a slot, a symbol, a subframe, or a frame.

In some embodiments, the target frequency domain resource is at least one frequency domain resource combination, where the frequency domain resource combination includes at least two frequencies, or the frequency domain resource combination includes at least two subcarriers, or the frequency domain resource combination includes at least two carriers, or the frequency domain resource combination includes at least two sub-bands, or the frequency domain resource combination includes at least two frequency bands.

The target frequency domain resource is at least one frequency domain resource that has a frequency offset relative to a frequency of the carrier signal.

The target frequency domain resource is a frequency domain resource that meets a second preset rule.

In some embodiments, the second preset rule is associated with an index of a target frequency unit.

Alternatively, the second preset rule is associated with a frequency domain offset of a target frequency unit relative to the carrier signal.

In some embodiments, the target frequency unit is one of the following: a frequency, a subcarrier, a carrier, a sub-band, or a frequency band.

In some embodiments, the target spatial domain resource is one or more direction combinations, each including at least two azimuth angles.

Alternatively, the target spatial domain resource is at least one direction that has an angular offset relative to a direction of the carrier signal.

Alternatively, the target spatial domain resource is a direction that is quasi-co-located QCL with a direction of the carrier signal.

In some embodiments, the target code domain resource is one or more sequence combinations, each including at least two sequences.

The at least two sequences are orthogonal or quasi-orthogonal.

In some embodiments, the target resource pool is a resource pool used for positioning.

In some embodiments, the target resource pool is specified in a protocol, or the target resource pool is predefined, or the target resource pool is pre-configured by the zero-power device, or the target resource pool is pre-configured or indicated by a network device that participates in positioning.

In some embodiments, the at least one resource is a resource randomly selected by the zero-power device from the target resource pool.

In some embodiments, each zero-power device participating in positioning randomly selects, from the target resource pool in a target probability distribution manner, the resource for transmitting the backscatter signal.

In some embodiments, in a case in which the at least one resource is determined based on the target resource pool and the identity information of the zero-power device, some or all of bits in an identity ID of the zero-power device are used to determine the at least one resource from the target resource pool.

In some embodiments, in a case in which the at least one resource is determined based on the identity information of the zero-power device and the first signalling received by the zero-power device, the first signalling is used to configure or indicate the target resource pool, and some or all of bits in the identity information of the zero-power device are used to determine the at least one resource from the target resource pool.

In some embodiments, N bits in the ID of the zero-power device are used to select a resource numbered $ID_{msb\_N}$ from the target resource pool, where $ID_{msb\_N}$ denotes a decimal value represented by the N bits in the ID of the zero-power device, and N is a positive integer.

In some embodiments, the ID of the zero-power device is used to select a resource numbered $mod(ID, N_{total})$ from the target resource pool, where $N_{total}$ denotes a total quantity of resources in the target resource pool, and mod denotes a modulo operation.

In some embodiments, the ID of the zero-power device includes at least one of the following: a first bit, a second bit, a third bit, or a fourth bit,
where the first bit is used to select a time domain resource from the target resource pool, the second bit is used to select a frequency domain resource from the target resource pool, the third bit is used to select a spatial domain resource from the target resource pool, and the fourth bit is used to select a code domain resource from the target resource pool.

In some embodiments, in a case in which the at least one resource is determined based on the target resource pool and the group identity information of the zero-power device, some or all of bits in a group identity of the zero-power device are used to determine a first resource set from the target resource pool, and the at least one resource is a resource selected by the zero-power device from the first resource set.

In some embodiments, in a case in which the at least one resource is determined based on the group identity information of the zero-power device and the first signalling received by the zero-power device, the first signalling is used to configure or indicate the target resource pool, some or all of bits in the group identity of the zero-power device are used to determine a first resource set from the target resource pool, and the at least one resource is a resource selected by the zero-power device from the first resource set.

In some embodiments, S bits in the group identity of the zero-power device are used to select a resource set numbered $ID^{set}_{msb\_s}$ from the target resource pool, where $ID^{set}_{msb\_s}$ denotes a decimal value represented by the S bits in the group identity of the zero-power device, and S is a positive integer.

In some embodiments, the group identity of the zero-power device is used to select a resource set numbered $mod(Group\ ID, N_{set\_total})$ from the target resource pool, where Group ID denotes the group identity of the zero-power device, $N_{set\_total}$ denotes a total quantity of resource sets in the target resource set, and mod denotes a modulo operation.

In some embodiments, in a case in which the at least one resource is determined based on the first signalling received by the zero-power device, the first signalling is used to configure or indicate at least one of a time domain resource, a frequency domain resource, a spatial domain resource, or a code domain resource used by the zero-power device, or the first signalling is used to configure or indicate a second resource set, and the at least one resource is a resource selected by the zero-power device from the second resource set.

In some embodiments, in a case in which the at least one resource is determined based on the target resource pool and the first signalling received by the zero-power device, the first signalling is used to indicate resource identity information, and some or all of bits in the resource identity information are used to determine the at least one resource from the target resource pool.

In some embodiments, K bits in the resource identity information are used to select a resource numbered $IS^{config}_{msb\_K}$ from the target resource pool, where $ID^{config}_{msb\_K}$ denotes a decimal value represented by the K bits in the resource identity information, and K is a positive integer.

In some embodiments, the resource identity information is used to select a resource numbered $mod(ID_{config}, N_{total})$ from the target resource pool, where $ID_{config}$ denotes the resource identity information, $N_{total}$ denotes a total quantity of resources in the target resource pool, and mod denotes a modulo operation.

In some embodiments, the resource identity information includes at least one of the following: a fifth bit, a sixth bit, a seventh bit, or an eighth bit, where the fifth bit is used to select a time domain resource from the target resource pool, the sixth bit is used to select a frequency domain resource from the target resource pool, the seventh bit is used to select a spatial domain resource from the target resource pool, and the eighth bit is used to select a code domain resource from the target resource pool.

In some embodiments, the resource identity information is an identifier used to select a positioning resource.

In some embodiments, in a case in which the at least one resource is determined at least based on the first signalling received by the zero-power device, the first signalling is transmitted by a device requiring for positioning, or the first signalling is transmitted by a device that performs a positioning operation, or the first signalling is transmitted by a network device that participates in positioning.

In some embodiments, the carrier signal is one of the following: a positioning reference signal, a measurement signal, a reference signal, or a reference sequence.

In some embodiments, a positioning measurement quantity corresponding to the backscatter signal includes at least one of the following: a reference signal received power RSRP, a received signal strength indicator RSSI, a signal to interference plus noise ratio SINR, a phase, a line of sight LOS indicator, a timing, or an angle.

In some embodiments, the zero-power device is an anchor device that participates in positioning, or the zero-power device is a device requiring for positioning.

In some embodiments, the foregoing communications unit may be a communications interface or a transceiver, or an input/output interface of a communications chip or a system on chip.

It should be understood that the zero-power device 400 according to embodiments of this application may correspond to the zero-power device in the method embodiments of this application, and the foregoing and other operations and/or functions of units in the zero-power device 400 are respectively used to implement corresponding processes of the zero-power device in the method 200 shown in FIG. 7. For brevity, details are not described herein again.

FIG. 13 is a schematic block diagram of a first device 500 according to an embodiment of this application. As shown in FIG. 13, the first device 500 includes:

a communications unit 410, configured to transmit first information,
where the first information is used to configure or indicate a target resource pool, and/or the first information is first signalling; and

at least one of the target resource pool or the first signalling is used by a zero-power device to determine a resource used for transmitting a backscatter signal, and the backscatter signal is used for positioning.

In some embodiments, in a case in which the first information is used to configure or indicate the target resource pool, the target resource pool includes at least one of the following: a target time domain resource, a target frequency domain resource, a target spatial domain resource, or a target code domain resource.

In some embodiments, the target time domain resource is part or all of time domain resources within a target time window, or the target time domain resource is a time domain resource that meets a first preset rule within a target time window.

In some embodiments, the target time window is a time domain resource repeated with a period of T in time domain.

The target time window is consecutive L time units after the carrier signal is received by the zero-power device, where L is a positive integer, and the carrier signal is used to be modulated to generate the backscatter signal for positioning.

In some embodiments, the first preset rule is associated with an index of a target time unit.

In some embodiments, the target time unit is one of the following: a slot, a symbol, a subframe, or a frame.

In some embodiments, the target frequency domain resource is at least one frequency domain resource combination, where the frequency domain resource combination includes at least two frequencies, or the frequency domain resource combination includes at least two subcarriers, or the frequency domain resource combination includes at least two carriers, or the frequency domain resource combination includes at least two sub-bands, or the frequency domain resource combination includes at least two frequency bands.

The target frequency domain resource is at least one frequency domain resource that has a frequency offset relative to a frequency of the carrier signal.

The target frequency domain resource is a frequency domain resource that meets a second preset rule.

In some embodiments, the second preset rule is associated with an index of a target frequency unit.

Alternatively, the second preset rule is associated with a frequency domain offset of a target frequency unit relative to the carrier signal.

In some embodiments, the target frequency unit is one of the following: a frequency, a subcarrier, a carrier, a sub-band, or a frequency band.

In some embodiments, the target spatial domain resource is one or more direction combinations, each including at least two azimuth angles.

Alternatively, the target spatial domain resource is at least one direction that has an angular offset relative to a direction of the carrier signal.

Alternatively, the target spatial domain resource is a direction that is quasi-co-located QCL with a direction of the carrier signal.

The carrier signal is used to be modulated to generate the backscatter signal for positioning.

In some embodiments, the target code domain resource is one or more sequence combinations, each including at least two sequences.

The at least two sequences are orthogonal or quasi-orthogonal.

In some embodiments, the target resource pool is a resource pool used for positioning.

In some embodiments, in a case in which the first information is the first signalling, the first signalling is used to configure or indicate at least one of a time domain resource, a frequency domain resource, a spatial domain resource, or a code domain resource used by the zero-power device, or the first signalling is used to configure or indicate a second resource set, and the zero-power device selects a resource for transmitting the backscatter signal from the second resource set.

In some embodiments, in a case in which the first information is used to configure or indicate the target resource pool, and the first information is the first signalling, the first signalling is used to indicate resource identity information, and some or all of bits in the resource identity information are used to determine a resource for transmitting the backscatter signal from the target resource pool.

In some embodiments, K bits in the resource identity information are used to select a resource numbered $ID^{cpnfig}_{msb\_K}$ from the target resource pool, where $ID^{config}_{msb\_K}$ denotes a decimal value represented by the K bits in the resource identity information, and K is a positive integer.

In some embodiments, the resource identity information is used to select a resource numbered $mod(ID_{config}, N_{total})$ from the target resource pool, where $ID_{config}$ denotes the resource identity information, $N_{total}$ denotes a total quantity of resources in the target resource pool, and mod denotes a modulo operation.

In some embodiments, the resource identity information includes at least one of the following: a fifth bit, a sixth bit, a seventh bit, or an eighth bit, where the fifth bit is used to select a time domain resource from the target resource pool, the sixth bit is used to select a frequency domain resource from the target resource pool, the seventh bit is used to select a spatial domain resource from the target resource pool, and the eighth bit is used to select a code domain resource from the target resource pool.

In some embodiments, the resource identity information is an identifier used to select a positioning resource.

In some embodiments, the first device is a device requiring for positioning, or the first device is a device that performs a positioning operation, or the first device is a network device that participates in positioning.

In some embodiments, a positioning measurement quantity corresponding to the backscatter signal includes at least one of the following: a reference signal received power RSRP, a received signal strength indicator RSSI, a signal to interference plus noise ratio SINR, a phase, a line of sight LOS indicator, a timing, or an angle.

In some embodiments, the zero-power device is an anchor device that participates in positioning, or the zero-power device is a device requiring for positioning.

In some embodiments, the foregoing communications unit may be a communications interface or a transceiver, or an input/output interface of a communications chip or a system on chip.

It should be understood that the first device 500 according to this embodiment of this application may correspond to the first device in the method embodiment of this application, and the foregoing and other operations and/or functions of the units in the first device 500 are separately used to implement corresponding processes of the first device in the method 300 shown in FIG. 11. For brevity, details are not described herein again.

FIG. 14 is a schematic structural diagram of a communications device 600 according to an embodiment of this application. The communications device 600 shown in FIG. 14 includes a processor 610, and the processor 610 may invoke a computer program from a memory and run the computer program to implement a method in embodiments of this application.

In some embodiments, as shown in FIG. 14, the communications device 600 may further include a memory 620. The processor 610 may invoke a computer program from the memory 620 and run the computer program to implement a method in embodiments of this application.

The memory 620 may be a separate component independent of the processor 610, or may be integrated into the processor 610.

In some embodiments, as shown in FIG. 14, the communications device 600 may further include a transceiver 630. The processor 610 may control the transceiver 630 to communicate with another device, specifically, may transmit information or data to the another device or receive information or data transmitted by the another device.

The transceiver 630 may include a transmitter and a receiver. The transceiver 630 may further include an antenna, and there may be one or more antennas.

In some embodiments, the processor 610 may implement a function of a processing unit in the terminal device, or the processor 610 may implement a function of a processing unit in the network device. For brevity, details are not described herein again.

In some embodiments, the transceiver 630 may implement a function of a communications unit in the terminal device. For brevity, details are not described herein again.

In some embodiments, the transceiver 630 may implement a function of a communications unit in the network device. For brevity, details are not described herein again.

In some embodiments, specifically, the communications device 600 may be the network device in embodiments of this application; and the communications device 600 may implement corresponding processes implemented by the network device in methods in the embodiments of this application. For brevity, details are not described herein again.

In some embodiments, specifically, the communications device 600 may be the terminal device in embodiments of this application; and the communications device 600 may implement corresponding processes implemented by the terminal device in methods in the embodiments of this application. For brevity, details are not described herein again.

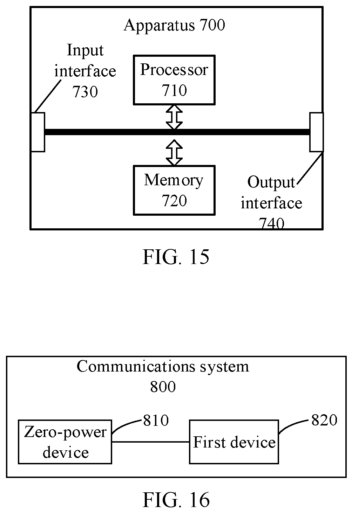

FIG. 15 is a schematic structural diagram of an apparatus according to an embodiment of this application. The apparatus 700 shown in FIG. 15 includes a processor 710, and the processor 710 may invoke a computer program from a memory and run the computer program to implement a method in embodiments of this application.

In some embodiments, as shown in FIG. 15, the apparatus 700 may further include a memory 720. The processor 710 may invoke a computer program from the memory 720 and run the computer program to implement a method in embodiments of this application.

The memory 720 may be a separate component independent of the processor 710, or may be integrated into the processor 710.

In some embodiments, the processor 710 may implement a function of a processing unit in the terminal device, or the processor 710 may implement a function of a processing unit in the network device. For brevity, details are not described herein again.

In some embodiments, the apparatus 700 may further include an input interface 730. The processor 710 may control the input interface 730 to communicate with another device or chip, and specifically, may acquire information or data transmitted by the another device or chip. Optionally, the processor 710 may be located inside or outside a chip.

In some embodiments, the input interface 730 may implement a function of a communications unit in the terminal device, or the input interface 730 may implement a function of a communications unit in the network device.

In some embodiments, the apparatus 700 may further include an output interface 740. The processor 710 may control the output interface 740 to communicate with another device or chip, and specifically, may output information or data to the another device or chip. Optionally, the processor 710 may be located inside or outside a chip.

In some embodiments, the output interface 740 may implement a function of a communications unit in the terminal device, or the output interface 740 may implement a function of a communications unit in the network device.

In some embodiments, the apparatus may be applied to the network device in embodiments of this application, and the apparatus may implement corresponding processes implemented by the network device in methods in embodiments of this application. For brevity, details are not described herein again.

In some embodiments, the apparatus may be applied to the terminal device in embodiments of this application; and the apparatus may implement corresponding processes implemented by the terminal device in methods in the embodiments of this application. For brevity, details are not described herein again.

In some embodiments, the apparatus mentioned in embodiments of this application may alternatively be a chip, for example, may be a system-level chip, a system chip, a chip system, or a system-on-chip, or the like.

FIG. 16 is a schematic block diagram of a communications system 800 according to an embodiment of this application. As shown in FIG. 16, the communications system 800 includes a zero-power device 810 and a first device 820.

The zero-power device 810 may be configured to implement corresponding functions implemented by the zero-power device in the foregoing method, and the first device 820 may be configured to implement corresponding functions implemented by the first device in the foregoing method. For brevity, details are not described herein again.

It should be understood that, a processor in embodiments of this application may be an integrated circuit chip having a signal processing capability. In an implementation process, the steps in the foregoing method embodiments may be performed by using an integrated logic circuit of hardware of the processor or instructions in a software form. The processor may be a general-purpose processor, a digital signal processor (Digital Signal Processor, DSP), an applicationspecific integrated circuit (Application Specific Integrated Circuit, ASIC), a field-programmable gate array (Field Programmable Gate Array, FPGA) or another programmable logic device, a discrete gate or a transistor logic device, or a discrete hardware component. The processor may implement or execute the methods, steps, and logical block diagrams disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by a combination of hardware and software modules in a decoding processor. The software module may be located in a mature storage medium in the art, for example, a random access memory, a flash memory, a read-only memory, a programmable read-only memory, an erasable programmable memory, or a register. The storage medium is located in a memory. The processor reads information from the memory, and completes the steps of the foregoing methods in combination with hardware in the processor.

It may be understood that the memory in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DR RAM). It should be noted that, the memory in the systems and methods described in this specification includes but is not limited to these memories and any memory of another proper type.

It should be understood that, by way of example but not limitative description, for example, the memory in embodiments of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch link DRAM, SLDRAM), a direct Rambus random access memory (Direct Rambus RAM, DR RAM), or the like. In other words, the memory in embodiments of this application includes but is not limited to these memories and any memory of another proper type.

An embodiment of this application further provides a computer-readable storage medium, configured to store a computer program.

In some embodiments, the computer-readable storage medium may be applied to the zero-power device in embodiments of this application; and the computer program causes a computer to execute corresponding processes implemented by the zero-power device in methods in the embodiments of this application. For brevity, details are not described herein again.

In some embodiments, the computer-readable storage medium may be applied to the first device in embodiments of this application; and the computer program causes a computer to execute corresponding processes implemented by the first device in methods in the embodiments of this application. For brevity, details are not described herein again.

An embodiment of this application further provides a computer program product, including computer program instructions.

In some embodiments, the computer program product may be applied to the zero-power device in embodiments of this application; and the computer program instructions cause a computer to execute corresponding processes implemented by the zero-power device in methods in the embodiments of this application. For brevity, details are not described herein again.

In some embodiments, the computer program product may be applied to the first device in embodiments of this application; and the computer program instructions cause a computer to execute corresponding processes implemented by the first device in methods in the embodiments of this application. For brevity, details are not described herein again.

An embodiment of this application further provides a computer program.

In some embodiments, the computer program may be applied to the zero-power device in embodiments of this application. When the computer program runs on a computer, the computer executes corresponding processes implemented by the zero-power device in methods in the embodiments of this application. For brevity, details are not described herein again.

In some embodiments, the computer program may be applied to the first device in embodiments of this application. When the computer program runs on a computer, the computer executes corresponding processes implemented by the first device in methods in embodiments of this application. For brevity, details are not described herein again.

A person of ordinary skill in the art may be aware that, units and algorithm steps in examples described in combination with embodiments disclosed in this specification can be implemented by electronic hardware or a combination of computer software and electronic hardware. Whether the functions are executed by hardware or software depends on particular applications and design constraints of the technical solutions. A person skilled in the art may use different methods to implement the described functions for each specific application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to corresponding processes in the foregoing method embodiments, and details are not described herein again.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. For such understanding, the technical solutions in embodiments of this application essentially, or the part contributing to the prior art, or some of the technical solutions may be implemented in a form of a software product. The computer software product is stored in a storage medium and includes several instructions for instructing a computer device (which may be a personal computer, a server, a network device, or the like) to execute all or some of the steps of the methods in embodiments of this application. The foregoing storage medium includes various media that may store a program code, such as a USB flash drive, a removable hard disk, a read-only memory (Read-only Memory, ROM), a random access memory (Random Access Memory, RAM), a magnetic disk, or an optical disk.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application should be subject to the protection scope of the claims.

**Claims**

1. A positioning method, comprising:

   receiving, by a zero-power device, a carrier signal, wherein the carrier signal is used to be modulated to generate a backscatter signal for positioning; and
   transmitting, by the zero-power device, the backscatter signal on at least one resource,
   wherein the at least one resource is determined based on at least one of following: a target resource pool, identity information of the zero-power device, group identity information of the zero-power device, or first signalling received by the zero-power device.

2. The method according to claim 1, wherein
   in a case in which the at least one resource is determined at least based on the target resource pool, the target resource pool comprises at least one of following: a target time domain resource, a target frequency domain resource, a target spatial domain resource, or a target code domain resource.

3. The method according to claim 2, wherein
   the target time domain resource is part or all of time domain resources within a target time window, or the target time domain resource is a time domain resource that meets a first preset rule within a target time window.

4. The method according to claim 3, wherein

   the target time window is a time domain resource repeated with a period of T in time domain; or
   the target time window is consecutive L time units after the carrier signal is received by the zero-power device, wherein L is a positive integer.

5. The method according to claim 3 or 4, wherein
   the first preset rule is associated with an index of a target time unit.

6. The method according to claim 4 or 5, wherein
   the target time unit is one of following: a slot, a symbol, a subframe, or a frame.

7. The method according to claim 2, wherein

   the target frequency domain resource is at least one frequency domain resource combination, wherein the frequency domain resource combination comprises at least two frequencies, or the frequency domain resource combination comprises at least two subcarriers, or the frequency domain resource combination comprises at least two carriers, or the frequency domain resource combination comprises at least two sub-bands, or the frequency domain resource combination comprises at least two frequency bands;

the target frequency domain resource is at least one frequency domain resource that has a frequency offset relative to a frequency of the carrier signal;
the target frequency domain resource is a frequency domain resource that meets a second preset rule.

8. The method according to claim 7, wherein

the second preset rule is associated with an index of a target frequency unit; or
the second preset rule is associated with a frequency domain offset of a target frequency unit relative to the carrier signal.

9. The method according to claim 8, wherein
the target frequency unit is one of following: a frequency, a subcarrier, a carrier, a sub-band, or a frequency band.

10. The method according to claim 2, wherein

the target spatial domain resource is one or more direction combinations, each comprising at least two azimuth angles; or
the target spatial domain resource is at least one direction that has an angular offset relative to a direction of the carrier signal; or
the target spatial domain resource is a direction that is quasi-co-located QCL with a direction of the carrier signal.

11. The method according to claim 2, wherein

the target code domain resource is one or more sequence combinations, each comprising at least two sequences,
wherein the at least two sequences are orthogonal or quasi-orthogonal.

12. The method according to any one of claims 2 to 11, wherein
the target resource pool is a resource pool used for positioning.

13. The method according to any one of claims 2 to 12, wherein the target resource pool is specified in a protocol, or the target resource pool is predefined, or the target resource pool is pre-configured by the zero-power device, or the target resource pool is pre-configured or indicated by a network device that participates in positioning.

14. The method according to any one of claims 2 to 13, wherein
the at least one resource is a resource randomly selected by the zero-power device from the target resource pool.

15. The method according to claim 14, wherein each zero-power device participating in positioning randomly selects, from the target resource pool in a target probability distribution manner, the resource for transmitting the backscatter signal.

16. The method according to any one of claims 1 to 13, wherein
in a case in which the at least one resource is determined based on the target resource pool and the identity information of the zero-power device, some or all of bits in an identity ID of the zero-power device are used to determine the at least one resource from the target resource pool.

17. The method according to any one of claims 1 to 13, wherein
in a case in which the at least one resource is determined based on the identity information of the zero-power device and the first signalling received by the zero-power device, the first signalling is used to configure or indicate the target resource pool, and some or all of bits in the identity information of the zero-power device are used to determine the at least one resource from the target resource pool.

18. The method according to claim 16 or 17, wherein
N bits in the ID of the zero-power device are used to select a resource numbered $ID_{msb\_N}$ from the target resource pool, wherein $ID_{msb\_N}$ denotes a decimal value represented by the N bits in the ID of the zero-power device, and N is a positive integer.

19. The method according to claim 16 or 17, wherein
the ID of the zero-power device is used to select a resource numbered $mod(ID, N_{total})$ from the target resource pool,

wherein $N_{total}$ denotes a total quantity of resources in the target resource pool, and mod denotes a modulo operation.

20. The method according to claim 16 or 17, wherein

the ID of the zero-power device comprises at least one of following: a first bit, a second bit, a third bit, or a fourth bit, wherein the first bit is used to select a time domain resource from the target resource pool, the second bit is used to select a frequency domain resource from the target resource pool, the third bit is used to select a spatial domain resource from the target resource pool, and the fourth bit is used to select a code domain resource from the target resource pool.

21. The method according to any one of claims 1 to 13, wherein
in a case in which the at least one resource is determined based on the target resource pool and the group identity information of the zero-power device, some or all of bits in a group identity of the zero-power device are used to determine a first resource set from the target resource pool, and the at least one resource is a resource selected by the zero-power device from the first resource set.

22. The method according to any one of claims 1 to 13, wherein
in a case in which the at least one resource is determined based on the group identity information of the zero-power device and the first signalling received by the zero-power device, the first signalling is used to configure or indicate the target resource pool, some or all of bits in a group identity of the zero-power device are used to determine a first resource set from the target resource pool, and the at least one resource is a resource selected by the zero-power device from the first resource set.

23. The method according to claim 21 or 22, wherein S bits in the group identity of the zero-power device are used to select a resource set numbered $ID^{set}_{msb\_s}$ from the target resource pool, wherein $ID^{set}_{msb\_s}$ denotes a decimal value represented by the S bits in the group identity of the zero-power device, and S is a positive integer.

24. The method according to claim 21 or 22, wherein the group identity of the zero-power device is used to select a resource set numbered $mod(Group\ ID, N_{set\_total})$ from the target resource pool, wherein Group ID denotes the group identity of the zero-power device, $N_{set\_total}$ denotes a total quantity of resource sets in the target resource set, and mod denotes a modulo operation.

25. The method according to any one of claims 1 to 13, wherein in a case in which the at least one resource is determined based on the first signalling received by the zero-power device, the first signalling is used to configure or indicate at least one of a time domain resource, a frequency domain resource, a spatial domain resource, or a code domain resource used by the zero-power device, or the first signalling is used to configure or indicate a second resource set, and the at least one resource is a resource selected by the zero-power device from the second resource set.

26. The method according to any one of claims 1 to 13, wherein
in a case in which the at least one resource is determined based on the target resource pool and the first signalling received by the zero-power device, the first signalling is used to indicate resource identity information, and some or all of bits in the resource identity information are used to determine the at least one resource from the target resource pool.

27. The method according to claim 26, wherein
K bits in the resource identity information are used to select a resource numbered $ID^{config}_{msb\_K}$ from the target resource pool, wherein $ID^{config}_{msb\_K}$ denotes a decimal value represented by the K bits in the resource identity information, and K is a positive integer.

28. The method according to claim 26, wherein
the resource identity information is used to select a resource numbered $mod(ID_{config}, N_{total})$ from the target resource pool, wherein $ID_{config}$ denotes the resource identity information, $N_{total}$ denotes a total quantity of resources in the target resource pool, and mod denotes a modulo operation.

29. The method according to claim 26, wherein

the resource identity information comprises at least one of following: a fifth bit, a sixth bit, a seventh bit, or an eighth bit,

wherein the fifth bit is used to select a time domain resource from the target resource pool, the sixth bit is used to select a frequency domain resource from the target resource pool, the seventh bit is used to select a spatial domain resource from the target resource pool, and the eighth bit is used to select a code domain resource from the target resource pool.

30. The method according to any one of claims 26 to 29, wherein the resource identity information is an identity used to select a positioning resource.

31. The method according to any one of claims 1 to 30, wherein
in a case in which the at least one resource is determined at least based on the first signalling received by the zero-power device, the first signalling is transmitted by a device requiring for positioning, or the first signalling is transmitted by a device that performs a positioning operation, or the first signalling is transmitted by a network device that participates in positioning.

32. The method according to any one of claims 1 to 31, wherein
the carrier signal is one of following: a positioning reference signal, a measurement signal, a reference signal, or a reference sequence.

33. The method according to any one of claims 1 to 32, wherein
a positioning measurement quantity corresponding to the backscatter signal comprises at least one of following: a reference signal received power RSRP, a received signal strength indicator RSSI, a signal to interference plus noise ratio SINR, a phase, a line of sight LOS indicator, a timing, or an angle.

34. The method according to any one of claims 1 to 33, wherein
the zero-power device is an anchor device that participates in positioning, or the zero-power device is a device requiring for positioning.

35. A positioning method, comprising:

transmitting, by a first device, first information,
wherein the first information is used to configure or indicate a target resource pool, and/or the first information is first signalling; and
at least one of the target resource pool or the first signalling is used by a zero-power device to determine a resource used for transmitting a backscatter signal, and the backscatter signal is used for positioning.

36. The method according to claim 35, wherein
in a case in which the first information is used to configure or indicate the target resource pool, the target resource pool comprises at least one of following: a target time domain resource, a target frequency domain resource, a target spatial domain resource, or a target code domain resource.

37. The method according to claim 36, wherein the target time domain resource is part or all of time domain resources within a target time window, or the target time domain resource is a time domain resource that meets a first preset rule within a target time window.

38. The method according to claim 37, wherein

the target time window is a time domain resource repeated with a period of T in time domain; or
the target time window is consecutive L time units after the carrier signal is received by the zero-power device, wherein L is a positive integer, and the carrier signal is used to be modulated to generate the backscatter signal for positioning.

39. The method according to claim 37 or 38, wherein
the first preset rule is associated with an index of a target time unit.

40. The method according to claim 38 or 39, wherein
the target time unit is one of following: a slot, a symbol, a subframe, or a frame.

41. The method according to claim 36, wherein

the target frequency domain resource is at least one frequency domain resource combination, wherein the frequency domain resource combination comprises at least two frequencies, or the frequency domain resource combination comprises at least two subcarriers, or the frequency domain resource combination comprises at least two carriers, or the frequency domain resource combination comprises at least two sub-bands, or the frequency domain resource combination comprises at least two frequency bands;

the target frequency domain resource is at least one frequency domain resource that has a frequency offset relative to a frequency of the carrier signal;

the target frequency domain resource is a frequency domain resource that meets a second preset rule.

42. The method according to claim 41, wherein

the second preset rule is associated with an index of a target frequency unit; or

the second preset rule is associated with a frequency domain offset of a target frequency unit relative to the carrier signal.

43. The method according to claim 42, wherein
the target frequency unit is one of following: a frequency, a subcarrier, a carrier, a sub-band, or a frequency band.

44. The method according to claim 36, wherein

the target spatial domain resource is one or more direction combinations, each comprising at least two azimuth angles; or

the target spatial domain resource is at least one direction that has an angular offset relative to a direction of a carrier signal; or

the target spatial domain resource is a direction that is quasi-co-located QCL with a direction of a carrier signal, wherein the carrier signal is used to be modulated to generate the backscatter signal for positioning.

45. The method according to claim 36, wherein

the target code domain resource is one or more sequence combinations, each comprising at least two sequences,

wherein the at least two sequences are orthogonal or quasi-orthogonal.

46. The method according to any one of claims 36 to 45, wherein
the target resource pool is a resource pool used for positioning.

47. The method according to claim 35, wherein
in a case in which the first information is the first signalling, the first signalling is used to configure or indicate at least one of a time domain resource, a frequency domain resource, a spatial domain resource, or a code domain resource used by the zero-power device, or the first signalling is used to configure or indicate a second resource set, and the zero-power device selects a resource for transmitting the backscatter signal from the second resource set.

48. The method according to claim 35, wherein
in a case in which the first information is used to configure or indicate the target resource pool, and the first information is the first signalling, the first signalling is used to indicate resource identity information, and some or all of bits in the resource identity information are used to determine a resource for transmitting the backscatter signal from the target resource pool.

49. The method according to claim 48, wherein
K bits in the resource identity information are used to select a resource numbered $\text{ID}^{\text{config}}_{\text{msb\_K}}$ from the target resource pool, wherein $\text{ID}^{\text{config}}_{\text{msb\_K}}$ denotes a decimal value represented by the K bits in the resource identity information, and K is a positive integer.

50. The method according to claim 48, wherein
the resource identity information is used to select a resource numbered $\text{mod}(\text{ID}_{\text{config}}, N_{\text{total}})$ from the target resource pool, wherein $\text{ID}_{\text{config}}$ denotes the resource identity information, $N_{\text{total}}$ denotes a total quantity of resources in the target resource pool, and mod denotes a modulo operation.

**51.** The method according to claim 48, wherein

the resource identity information comprises at least one of following: a fifth bit, a sixth bit, a seventh bit, or an eighth bit,
wherein the fifth bit is used to select a time domain resource from the target resource pool, the sixth bit is used to select a frequency domain resource from the target resource pool, the seventh bit is used to select a spatial domain resource from the target resource pool, and the eighth bit is used to select a code domain resource from the target resource pool.

**52.** The method according to any one of claims 48 to 51, wherein the resource identity information is an identity used to select a positioning resource.

**53.** The method according to any one of claims 35 to 52, wherein the first device is a device requiring for positioning, or the first device is a device that performs a positioning operation, or the first device is a network device that participates in positioning.

**54.** The method according to any one of claims 35 to 53, wherein
a positioning measurement quantity corresponding to the backscatter signal comprises at least one of following: a reference signal received power RSRP, a received signal strength indicator RSSI, a signal to interference plus noise ratio SINR, a phase, a line of sight LOS indicator, a timing, or an angle.

**55.** The method according to any one of claims 35 to 54, wherein
the zero-power device is an anchor device that participates in positioning, or the zero-power device is a device requiring for positioning.

**56.** A zero-power device, comprising:

a first communications unit, configured to receive a carrier signal, wherein the carrier signal is used to be modulated to generate a backscatter signal for positioning; and
a second communications unit, configured to transmit the backscatter signal on at least one resource,
wherein the at least one resource is determined based on at least one of following: a target resource pool, identity information of the zero-power device, group identity information of the zero-power device, or first signalling received by the zero-power device.

**57.** A first device, comprising:

a communications unit, configured to transmit first information,
wherein the first information is used to configure or indicate a target resource pool, and/or the first information is first signalling; and
at least one of the target resource pool or the first signalling is used by a zero-power device to determine a resource used for transmitting a backscatter signal, and the backscatter signal is used for positioning.

**58.** A zero-power device, comprising a processor and a memory, wherein the memory is configured to store a computer program; and the processor is configured to invoke and run the computer program stored in the memory, to cause the zero-power device to execute the method according to any one of claims 1 to 34.

**59.** A first device, comprising a processor and a memory, wherein the memory is configured to store a computer program; and the processor is configured to invoke and run the computer program stored in the memory, to cause the first device to execute the method according to any one of claims 35 to 55.

**60.** A chip, comprising a processor, configured to invoke a computer program from a memory and run the computer program, to cause a device on which the chip is installed to execute the method according to any one of claims 1 to 34.

**61.** A chip, comprising a processor, configured to invoke a computer program from a memory and run the computer program, to cause a device on which the chip is installed to execute the method according to any one of claims 35 to 55.

**62.** A computer-readable storage medium, configured to store a computer program, wherein the computer program, when executed, causes the method according to any one of claims 1 to 34 to be implemented.

63. A computer-readable storage medium, configured to store a computer program, wherein the computer program, when executed, causes the method according to any one of claims 35 to 55 to be implemented.

64. A computer program product, comprising computer program instructions, wherein the computer program instructions, when executed, cause the method according to any one of claims 1 to 34 to be implemented.

65. A computer program product, comprising computer program instructions, wherein the computer program instructions, when executed, cause the method according to any one of claims 35 to 55 to be implemented.

66. A computer program, wherein the computer program, when executed, causes the method according to any one of claims 1 to 34 to be implemented.

67. A computer program, wherein the computer program, when executed, causes the method according to any one of claims 35 to 55 to be implemented.

100

FIG. 1

FIG. 2

FIG. 3

FIG. 4

FIG. 5

FIG. 6

**200**

A zero-power device receives a carrier signal, where the carrier signal is used to be modulated to generate a backscatter signal for positioning ⟋ S210

The zero-power device transmits the backscatter signal on at least one resource, where the at least one resource is determined based on at least one of the following: a target resource pool, identity information of the zero-power device, group identity information of the zero-power device, or first signalling received by the zero-power device ⟋ S220

FIG. 7

( x0, y0, RSRP0 )    ( x4, y4, RSRP4 )    ( x8, y8, RSRP8 )    ( x12, y12, RSRP12 )

( x1, y1, RSRP1 )    ( x5, y5, RSRP5 )    ( x9, y9, RSRP9 )    ( x13, y13, RSRP13 )

RSRP → (x, y)?

( x2, y2, RSRP2 )    ( x6, y6, RSRP6 )    ( x10, y10, RSRP10 )    ( x14, y14, RSRP14 )

( x3, y3, RSRP3 )    ( x7, y7, RSRP7 )    ( x11, y11, RSRP11 )    ( x15, y15, RSRP15 )

(a)

( x0, y0, RSRP0 )    ( x4, y4, RSRP4 )    ( x8, y8, RSRP8 )    ( x12, y12, RSRP12 )

( x1, y1, RSRP1 )    ( x5, y5, RSRP5 )    ( x9, y9, RSRP9 )    ( x13, y13, RSRP13 )

RSRP → (x, y) ?

( x2, y2, RSRP2 )    ( x6, y6, RSRP6 )    ( x10, y10, RSRP10 )    ( x14, y14, RSRP14 )

( x3, y3, RSRP3 )    ( x7, y7, RSRP7 )    ( x11, y11, RSRP11 )    ( x15, y15, RSRP15 )

(b)

FIG. 8

FIG. 9

FIG. 10

Zero-power
electronic tag #2

Zero-power
electronic tag #1

300

A first device transmits first information,
where the first information is used to configure or indicate a target
resource pool, and/or the first information is first signalling; and
at least one of the target resource pool or the first signalling is
used by a zero-power device to determine a resource used for
transmitting a backscatter signal, and the backscatter signal is
used for positioning.

S310

FIG. 11

Zero-power device 400

First communications
unit 410

Second communications
unit 420

FIG. 12

First device 500

Communications
unit 510

FIG. 13

Communications
device 600

Memory
620

Processor
610

Transceiver
630

FIG. 14

Apparatus 700

Input
interface
730

Processor
710

Memory
720

Output
interface
740

FIG. 15

Communications system
800

Zero-power
device

810

First device

820

FIG. 16

## INTERNATIONAL SEARCH REPORT

| International application No. |
| --- |
| **PCT/CN2022/135097** |

### A. CLASSIFICATION OF SUBJECT MATTER

H04W4/02(2018.01)i

According to International Patent Classification (IPC) or to both national classification and IPC

### B. FIELDS SEARCHED

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT, 3GPP: 零功耗, 低功耗, 定位, 位置, 方位, 反向散射信号, 时域, 频域, 空域, 码域, 标识, 信令, low power consumption, zero power consumption, locat+, posit+, reverse scatter+, time domain, frequency domain, code domain, ID, signalling

### C. DOCUMENTS CONSIDERED TO BE RELEVANT

| Category* | Citation of document, with indication, where appropriate, of the relevant passages | Relevant to claim No. |
| --- | --- | --- |
| X | WO 2021232368 A1 (GUANGDONG OPPO MOBILE TELECOMMUNICATIONS CORP., LTD.) 25 November 2021 (2021-11-25) <br> description, paragraphs 0082-0193, and claims 1-23 | 1-26, 30-48, 52-67 |
| A | WO 2021232368 A1 (GUANGDONG OPPO MOBILE TELECOMMUNICATIONS CORP., LTD.) 25 November 2021 (2021-11-25) <br> description, paragraphs 0082-0193, and claims 1-23 | 27-29, 49-51 |
| X | CN 115336186 A (GUANGDONG OPPO MOBILE COMMUNICATIONS CO., LTD.) 11 November 2022 (2022-11-11) <br> description, paragraphs 0068-0193 | 1-26, 30-48, 52-67 |
| A | CN 115336186 A (GUANGDONG OPPO MOBILE COMMUNICATIONS CO., LTD.) 11 November 2022 (2022-11-11) <br> description, paragraphs 0068-0193 | 27-29, 49-51 |
| A | US 2022069460 A1 (RF CONTROLS LLC.) 03 March 2022 (2022-03-03) <br> entire document | 1-67 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 July 2023** | **01 August 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2022/135097**

| C. | DOCUMENTS CONSIDERED TO BE RELEVANT | |
|---|---|---|
| Category* | Citation of document, with indication, where appropriate, of the relevant passages | Relevant to claim No. |
| A | CN 112986905 A (UNIVERSITY OF ELECTRONIC SCIENCE AND TECHNOLOGY OF CHINA) 18 June 2021 (2021-06-18) entire document | 1-67 |

Form PCT/ISA/210 (second sheet) (July 2022)

**INTERNATIONAL SEARCH REPORT**
Information on patent family members

International application No.

**PCT/CN2022/135097**

| Patent document cited in search report | | | Publication date (day/month/year) | Patent family member(s) | Publication date (day/month/year) |
|---|---|---|---|---|---|
| WO | 2021232368 | A1 | 25 November 2021 | None | |
| CN | 115336186 | A | 11 November 2022 | None | |
| US | 2022069460 | A1 | 03 March 2022 | None | |
| CN | 112986905 | A | 18 June 2021 | None | |

Form PCT/ISA/210 (patent family annex) (July 2022)